(19) Europäisches Patentamt
European Patent Office
Office européen des brevets

(11) EP 4 768 515 A1

(12) EUROPEAN PATENT APPLICATION

(43) Date of publication:
**01.07.2026 Bulletin 2026/27**

(21) Application number: **25221656.9**

(22) Date of filing: **09.12.2025**

(51) International Patent Classification (IPC):
***C08G 18/63*** *(2006.01)* ***C08G 18/22*** *(2006.01)*
***C08F 290/06*** *(2006.01)* ***C08G 18/28*** *(2006.01)*
***C08G 18/48*** *(2006.01)* ***C08G 18/76*** *(2006.01)*
***C08G 18/81*** *(2006.01)* ***C08G 65/12*** *(2006.01)*
***C08G 65/26*** *(2006.01)* ***C08G 65/333*** *(2006.01)*

(52) Cooperative Patent Classification (CPC):
**C08G 18/227; C08G 18/282; C08G 18/283; C08G 18/4829; C08G 18/485; C08G 18/632; C08G 18/7671; C08G 18/8116; C08G 65/2609; C08G 65/2663; C08G 65/33358**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **30.12.2024 US 202463739970 P**
**11.03.2025 EP 25163083**

(71) Applicant: **Covestro LLC**
**Pittsburgh, PA 15205 (US)**

(72) Inventors:
- **Parks, Brandon W.**
**McKees Rocks, 15136 (US)**
- **Adkins, Rick**
**Hurricane, 25526 (US)**
- **Wagner, Daniel**
**Pittsburgh, 15241 (US)**

(74) Representative: **Levpat**
**c/o Covestro AG**
**Gebäude K12**
**51365 Leverkusen (DE)**

# (54) POLYMER POLYOLS AND PROCESSES FOR THEIR PREPARATION

(57) Polymer polyols and processes for producing polymer polyols. The polymer polyols include a dispersion of polymer particles in a base polyol and include a reaction product of a reaction mixture that includes an ethylenically unsaturated composition. The ethylenically unsaturated composition includes an ethylenically unsaturated compound that is a reaction product of an ethylenically unsaturated compound comprising a hydroxyl-reactive group and a polyether monol.



Processed by Luminess, 75001 PARIS (FR)

## Description

### FIELD

This specification pertains generally to polymer polyols and processes for producing such polymer polyols ("PMPOs"). The PMPOs can, in at least some cases, exhibit a relatively low viscosity and have a monomodal particle size distribution with a reduced mean particle size, even at reduced acrylonitrile content, which, it is currently believed, can lead to good filterability and improved performance in flexible foam applications.

### BACKGROUND

PMPOs are viscous fluids comprising solid polymer particles dispersed in a base polyol, often a polyether polyol. Suitable polymer solids include styrene-acrylonitrile co-polymers that are typically prepared by in situ polymerization in the base polyol. PMPOs are commonly used for producing polyurethane foams, often flexible polyurethane foams.

Pre-formed stabilizers ("PFS") are useful for preparing PMPOs with relatively low viscosity at relatively high solids content. The solid polymer particles in such PMPOs can exhibit a monomodal particle size distribution and a relatively low mean particle size, which is desirable for processing of the PMPO and desirable in terms of performance of the PMPO in flexible foam applications. Often, the PFS is obtained by reacting a macromer which contains reactive unsaturation with an ethylenically unsaturated monomer, optionally in a diluent or a solvent. Reaction conditions may be controlled such that a portion of the co-polymer precipitates from solution to form a solid. In many applications, a dispersion having a low polymer solids content, such as 3 to 15% by weight, is obtained. Typically, the reaction conditions are controlled such that the particle size of the polymer solids is small, thereby enabling the polymer particles to function as "seeds" in the subsequent PMPO reaction.

Flexible polyurethane foams using PMPOs are often produced in large buns commonly referred to as slabstock. To produce a slabstock, the polyurethane foam-forming composition is poured onto a conveyor belt. The composition immediately begins foaming and rising while traveling down the conveyor to produce a bun that is often several feet high. The slabstock is allowed to cure and is then cut into a desired size and shape.

One problem associated with production of low-density flexible polyurethane slabstock foams is a yellow to brownish discoloration that occurs at the center of the slabstock. This discoloration, which is often referred to as "scorch", is often most apparent in the center of the slabstock bun where internal temperatures remain high for a relatively long period of time. The common presence of flame retardants in the polyurethane foam-forming composition often exacerbates this problem. The use of antioxidants can mitigate to some extent the evolution of "scorch", but their use if often not adequate to prevent the problem.

Another means of reducing "scorch" is to reduce the content of acrylonitrile used to form the styrene-acrylonitrile co-polymer particles in the PMPO. This is believed to be because the presence of neighboring acrylonitrile groups in the co-polymer of the PMPO can form chromophores with each other at the high temperatures present in the center of the slabstock bun, thereby at least partly causing "scorch". As acrylonitrile content is reduced, the statistical chance that two neighboring acrylonitrile groups should form is reduced, thus reducing the chance of "scorch" formation. Indeed, it is believed that even a relatively small reduction in acrylonitrile content can significantly reduce "scorch" during slabstock foam production.

Unfortunately, however, there have been drawbacks associated with reducing the content of acrylonitrile used to form the styrene-acrylonitrile co-polymer particles in the PMPO. Specifically, simply reducing acrylonitrile content has resulted in poorer co-polymer particle stability in the PMPO. This manifests itself in poorer product filterability, increased average particle size, and, in some cases, bi- and multi-modal particle size distributions. Increased particle size may lead to increased PMPO viscosity, which is undesirable at least from a handling/processability perspective. Also, PMPOs with small particle size and monomodal particle size distribution typically result in better foam performance and foam processing.

Despite the usefulness of PFS', efforts are still continuously made to further reduce the mean particle size of the solid polymer particles in a PMPO, while having no significant detrimental impact on other PMPO characteristics, such as viscosity, polymer solids content, and the like. In addition, it would be desirable to provide a way to produce PMPOs utilizing a high S:AN ratio, while still maintaining relatively low PMPO viscosity, monomodal particle size distribution, low mean particle size, and high filterability.

The inventions of this specification were made in view of these desires.

### SUMMARY

In certain respects, this specification relates to PMPOs comprising a dispersion of polymer particles in a base polyol. The PMPOs comprise a reaction product of a reaction mixture comprising: (a) the base polyol; (b) a PFS; and (c) an

ethylenically unsaturated composition. The ethylenically unsaturated composition (c) comprises: (1) an ethylenically unsaturated compound of the formula (A):

$$Z\text{-}(A^5)_{n5}\text{-}OX^5 \qquad (A)$$

in which Z represents a hydrocarbyl residue selected from $C_4$-$C_{60}$ alkyl, aryl, and aralkyl, $A^5$ represents an oxyalkylene group, and n5 represents the average number of oxyalkylene groups and has a value such that the ethylenically unsaturated compound of formula (A) has a Mn of 1,000 to 12,000 g/mole, and $X^5$ is a moiety that includes and an ethylenically unsaturated group; and (2) an ethylenically unsaturated compound that is different from ethylenically unsaturated compound (1).

In other respects, this specification relates to processes for producing a PMPO. These processes comprise free-radically polymerizing an ethylenically unsaturated composition in a reaction mixture. The reaction mixture comprises: (a) a base polyol; (b) a PFS; and (c) the ethylenically unsaturated composition. The ethylenically unsaturated composition (c) comprises: (1) an ethylenically unsaturated compound of the formula (A):

$$Z\text{-}(A^5)_{n5}\text{-}OX^5 \qquad (A)$$

in which Z represents a hydrocarbyl residue selected from $C_4$-$C_{60}$ alkyl, aryl, and aralkyl, $A^5$ represents an oxyalkylene group, and n5 represents the average number of oxyalkylene groups and has a value such that the ethylenically unsaturated compound of formula (A) has a Mn of 1,000 to 12,000 g/mole, and $X^5$ is a moiety that includes an ethylenically unsaturated group; and (2) an ethylenically unsaturated compound that is different from ethylenically unsaturated compound (1).

In other respects, this specification relates to polyurethane foam-forming compositions that include such PMPOs and to polyurethane foams produced from such foam-forming compositions.

## DETAILED DESCRIPTION

Various implementations are described and illustrated in this specification to provide an overall understanding of the structure, function, properties, and use of the disclosed inventions. It is understood that the various implementations described and illustrated in this specification are non-limiting and non-exhaustive. Thus, the invention is not limited by the description of the various non-limiting and non-exhaustive implementations disclosed in this specification. The features and characteristics described in connection with various implementations may be combined with the features and characteristics of other implementations. Such modifications and variations are intended to be included within the scope of this specification. As such, the claims may be amended to recite any features or characteristics expressly or inherently described in, or otherwise expressly or inherently supported by, this specification. Further, Applicant(s) reserve the right to amend the claims to affirmatively disclaim features or characteristics that may be present in the prior art. Therefore, any such amendments comply with the requirements of 35 U.S.C. § 112 and 35 U.S.C. § 132(a). The various implementations disclosed and described in this specification can comprise, consist of, or consist essentially of the features and characteristics as variously described herein.

Any patent, publication, or other disclosure material identified herein is incorporated by reference into this specification in its entirety unless otherwise indicated, but only to the extent that the incorporated material does not conflict with existing definitions, statements, or other disclosure material expressly set forth in this specification. As such, and to the extent necessary, the express disclosure as set forth in this specification supersedes any conflicting material incorporated by reference herein. Any material, or portion thereof, that is said to be incorporated by reference into this specification, but which conflicts with existing definitions, statements, or other disclosure material set forth herein, is only incorporated to the extent that no conflict arises between that incorporated material and the existing disclosure material. Applicant(s) reserves the right to amend this specification to expressly recite any subject matter, or portion thereof, incorporated by reference herein.

In this specification, other than where otherwise indicated, all numerical parameters are to be understood as being prefaced and modified in all instances by the term "about", in which the numerical parameters possess the inherent variability characteristic of the underlying measurement techniques used to determine the numerical value of the parameter. At the very least, and not as an attempt to limit the application of the doctrine of equivalents to the scope of the claims, each numerical parameter described in the present description should at least be construed in light of the number of reported significant digits and by applying ordinary rounding techniques.

Also, any numerical range recited in this specification is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to

7.6. Any maximum numerical limitation recited in this specification is intended to include all lower numerical limitations subsumed therein and any minimum numerical limitation recited in this specification is intended to include all higher numerical limitations subsumed therein. Accordingly, Applicant(s) reserves the right to amend this specification, including the claims, to expressly recite any sub-range subsumed within the ranges expressly recited herein. All such ranges are intended to be inherently described in this specification such that amending to expressly recite any such sub-ranges would comply with the requirements of 35 U.S.C. § 112 and 35 U.S.C. § 132(a).

The grammatical articles "one", "a", "an", and "the", as used in this specification, are intended to include "at least one" or "one or more", unless otherwise indicated. Thus, the articles are used in this specification to refer to one or more than one (i.e., to "at least one") of the grammatical objects of the article. By way of example, "a component" means one or more components, and thus, possibly, more than one component is contemplated and may be employed or used in an implementation of the described implementations. Further, the use of a singular noun includes the plural, and the use of a plural noun includes the singular, unless the context of the usage requires otherwise.

As used herein, the term "functionality" refers to the average number of reactive hydroxyl groups, -OH, present per molecule of the -OH functional material that is being described. In the production of polyurethane foams, the hydroxyl groups react with isocyanate groups, -NCO, that are attached to the isocyanate compound. The term "hydroxyl number" or "OH number" refers to the number of reactive hydroxyl groups available for reaction and is expressed as the number of milligrams of potassium hydroxide equivalent to the hydroxyl content of one gram of the polyol, determined according to ASTM D4274-16. The term "equivalent weight" refers to the weight of a compound divided by its valence. For a polyol, the equivalent weight is the weight of the polyol that will combine with an isocyanate group and may be calculated by dividing the molecular weight of the polyol by its functionality. The equivalent weight of a polyol may also be calculated by dividing 56,100 by the hydroxyl number of the polyol - Equivalent Weight (g/eq) = (56.1 x 1000)/OH number.

Any number average and weight average, $M_n$ and $M_w$ value disclosed in this specification are values as determined by gel-permeation chromatography (GPC) using a method based on DIN 55672-1, employing chloroform as the eluent with a mixed bed column (Agilent PL Gel; SDVB; 3 micron Pore diameter: 1×Mixed-E+5 micron Pore diameter: 2× Mixed-D), refractive index (RI) detection and calibrated with polyethylene glycol as the standard.

The term "isocyanate index" refers to the relative stoichiometric amount of isocyanate functional groups necessary to react with the isocyanate reactive groups present in the overall foam formulation. It is often expressed as a percentage; thus, equal stoichiometric amounts of isocyanate functional groups and isocyanate reactive functional groups in the formulation provides an isocyanate index of 100%.

As used herein, the term "monomer" means the simple unpolymerized form of a chemical compound having relatively low molecular weight, e.g., acrylonitrile, styrene, methyl methacrylate, and the like.

As used herein, the phrase "ethylenically unsaturated composition " means a composition that includes two or more compounds containing ethylenic unsaturation (C=C, i.e., two double bonded carbon atoms) capable of undergoing a free radically induced addition polymerization reaction.

As used herein, the term "macromer" means a molecule comprising one or more polymerizable double bonds and one or more hydroxyl-terminated polyether tails. In some implementations, macromers are polyether polyols (identical or different to the base polyol of the PMPO) with terminal double bonds that can copolymerize with vinylic monomers and to form graft dispersants during the radical copolymerization. The polyol part of the macromer typically contains long chains that are highly soluble in the continuous base polyol phase of the PMPO.

A used herein, the term "pre-formed stabilizer" or "PFS" means an intermediate obtained by reacting a macromer with one or more ethylenically unsaturated monomers, in the presence of a polymer control agent ("PCA") and, optionally, in a diluent, to give a co-polymer dispersion having a relatively low solids content, such as <30%.

In this specification, the term "stability", if used, means the ability of a material to maintain a stable form such as the ability to stay in solution or in suspension. PMPOs having good stability generally also have good filterability.

The phrase "mole unsaturation/mole polyol" if used herein, refers to a calculated value determined by dividing the number of moles of unsaturated compound used by the number of moles of polyol. The number of moles of polyol is calculated based on the molecular weight of the polyol as determined by the hydroxyl equivalent weight and nominal functionality.

"Polyol feed", if used herein, refers to the amount of base polyol feed present in the PMPO or present in the process of preparing the PMPO. The phrase "total feed", if used herein, refers to the sum of all quantities of components present in the product being referenced (such as a pre-formed stabilizer or a PMPO or present in the process of preparing such a product.

Unless otherwise specifically indicated (as in the Examples section where the reported solids content values are calculated from the concentrations of monomers measured in the crude polymer polyol before stripping), the solids content values of PMPOs described in this specification are determined using a Bruker 400 or 500 MHz spectrometer according to the following procedure: (1) 100-150 mg of PMPO is dissolved in ~ 0.9 ml of acetone-$d_6$ containing dissolved chromium(III) acetylacetonate ($Cr(acac)_3$) relaxation agent, adding additional acetone-$d_6$ as needed until a clear solution is obtained; (2) filling a Nuclear Magnetic Resonance (NMR) tube with ~0.7 ml of the solution obtained from step (1); (3) acquiring a $^{13}C$

NMR spectrum using inverse gated decoupling pulse sequence, ensuring that enough transients are acquired to obtain a good signal-to-noise ratio for all signals of interest, which typically requires overnight acquisition of 16 hours or more (due to the use of relaxation agent, $Cr(acac)_3$, a relaxation delay (d1) of 3 seconds will suffice in most cases); (4) Fourier transform the spectrum using 3 Hz of exponential line broadening; (5) performing phase correction and baseline correction of the spectrum (use the acetone-$d_6$ signal set at 29.92 ppm as the reference chemical shift of the spectrum); (6) integrating the regions of interest in the spectrum (see table below):

| Integral Region | $^{13}C$ Chemical shift Range (ppm) |
|---|---|
| A | 20.3 - 14.4 |
| B | 62.5 - 61.4 |
| C | 77.4 - 65.9 |
| D | 79.6 - 79.1 |
| E | 123.4 - 118.9 |
| F | 131.3 - 125.4 |

; and (7) based on the integral areas from above, calculating the solids content of the PMPO sample using the equations below:

$$\text{Mole \% of Styrene} = 100 \text{ x } (F/5)/(F/5+A+D+E+(C+B-2*A-2*D)/2)$$

$$\text{Mole \% of Acrylonitrile (AN)} = 100 \text{ x } (E)/(F/5+A+D+E+(C+B-2*A-2*D)/2)$$

$$\text{Weight \% of Styrene} = 100 \text{ x (Mole \% Styrene x 104.15)/Sum (Mole \% x MW of each component)}$$

$$\text{Weight \% of Acrylonitrile} = 100 \text{ x (Mole \% AN x 53.06)/Sum (Mole \% x MW of each component).}$$

The viscosity values described in this specification are in units of millipascal-seconds (mPa·s), are measured at 25° C, and are measured on an Anton Paar SVM3000 viscometer at 25°C that has been demonstrated to give equivalent results as can be generated with ASTM-D4878-15. The instrument is calibrated using mineral oil reference standards of known viscosity.

The particle size values of PMPOs described in this specification refer to the volume-based mean particle size and are determined via a laser diffraction method using a Malvern Panalytical Mastersizer 3000 Hydro MV with isopropyl alcohol as the dispersant and Mie theory as the scattering model.

As indicated, certain implementations of the present specification are directed to PMPOs. In some embodiments, the PMPOs of this specification have a solids content of 30% by weight to 75% by weight, such as 35% by weight to 70% by weight, 40% by weight to 60% by weight, or 45% by weight to 55% by weight, based on the total weight of the PMPO. In some cases, the solids content is 48% by weight to 50% by weight.

In some implementations, the PMPOs of this specification have a viscosity of less than 50,000 mPa·s, less than 40,000 mPa·s, less than 30,000 mPa·s, less than 20,000 mPa·s, less than 15,000 mPa·s, or, in some cases, less than 10,000 mPa·s. Such PMPOs may also have a viscosity of at least 1,000 mP·s, at least 2,000 mPa·s, at least 3,000 mPa·s, or at least 4,000 mPa·s. More specifically, in some implementations, the PMPOs of this specification have a viscosity of 1,000 to 8,000 mP·s, 2,000 to 7,000 mPa·s, 3,000 to 6,000 mPa·s, or 4,000 to 5,000 mPa·s.

In addition, in some implementations, the PMPOs of this specification exhibit a monomodal particle size distribution. As used herein, "monomodal particle size distribution" refers to a situation in which a distribution curve of the polymer particle sizes of the PMPO has only one maxima. In some implementation, the polymer particles of the PMPO have a volume-based mean particle size of no more than 1.5μm, such as 0.1 to 1.5μm, 0.1 to 1.2 μm, 0.1 to 1.05 μm, 0.5 to 1.0 μm, 0.60 to 0.90 μm, 0.70 to 0.90 μm, 0.80 to 0.90 μm, 0.60 to 0.80 μm, or 0.70 to 0.80 μm.

Furthermore, in some cases, the PMPOs of this specification exhibit good stability and, as a result, good filterability. As used herein, when it is stated that the PMPO exhibits "good filterability" it means that essentially 100% of the PMPO passes through a 700 mesh screen within 300 seconds. Filterability is determined in the manner described in U.S. Patent No. 5,196,476 ("the '476 Patent") at col. 22, lines 38-55, which is incorporated herein by reference, except that the

time required for essentially 100% of the PMPO to pass through a 700 mesh screen is reported rather than the percent of sample which passes through the 700 mesh screen within 300 seconds. "Essentially 100%" in this context means over 99% by weight of the sample passes through the screen.

As indicated earlier, the PMPOs of this specification include a base polyol. Suitable base polyols include, for example, polyols having a functionality of 2 to 8, such as 2 to 6, 3 to 6, 3 to 5, or 4 to 6, and an OH number of 20 to 400 mg KOH/g, 20 to 200 mg KOH/g, 20 to 150 mg KOH/g, 20 to 100 mg KOH/g, or, in some cases, 20 to 75 mg KOH/g, 20 to 50 mg KOH/g, 25 to 50 mg KOH/g, or 30 to 50 mg KOH/g. In some implementations, the base polyol has a number average molecular weights of 600 to 15,000 g/mol, 2,000 to 12,000 g/mol, or 3,000 to 8,000 g/mole. In the case where multiple base polyols are present, then the foregoing ranges may reflect the weighted average values for all base polyols present in the reaction mixture.

The base polyol may comprise any of a variety of polyol types. Suitable polyols include, for example, polyether polyols; alkylene oxide adducts of non-reducing sugars and sugar derivatives; alkylene oxide adducts of phosphorus and polyphosphorus acids; alkylene oxide adducts of polyphenols; polycarbonate polyols; polyols from natural oils, such as castor oil; and alkylene oxide adducts of polyhydroxyalkanes.

Suitable polyether polyols may be conventional polyether polyols prepared by basic catalysis, or low unsaturation polyether polyols prepared using double metal cyanide ("DMC") catalyst. Conventional polyether polyols often have unsaturation levels of 0.01 meq/g or higher, and low unsaturation polyether polyols often have unsaturation levels of 0.001 to about 0.01 meq/gram.

Specific examples of suitable polyether polyols are polyoxyethylene glycols, triols, tetrols and higher functionality polyoxyethylene polyols, polyoxypropylene glycols, triols, tetrols and higher functionality polyoxypropylene polyols, as well as mixtures thereof. When mixtures are used, the ethylene oxide and propylene oxide may be added simultaneously or sequentially to provide internal blocks, terminal blocks or random distribution of the oxyethylene groups and/or oxypropylene groups in the polyether polyol. The resultant polyols can be either ethylene oxide terminated or propylene oxide terminated. Suitable starters or initiators for these polyether polyols include, for example, ethylene glycol, propylene glycol, diethylene glycol, dipropylene glycol, tripropylene glycol, trimethyolpropane, glycerol, pentaerythritol, sorbitol, sucrose, ethylenediamine, toluene diamine, and mixtures of any two or more thereof. By alkoxylation of the starter, a suitable polyether polyol for the base polyol component can be formed. The alkoxylation reaction may be catalyzed using any conventional catalyst including, for example, potassium hydroxide (KOH) or a DMC catalyst.

Illustrative alkylene oxide adducts of polyhydroxyalkanes include, for example, alkylene oxide adducts of 1,3-dihydroxypropane, 1,3-dihydroxybutane, 1,4-dihydroxybutane,1,4-, 1,5- and 1,6-dihydroxyhexane, 1,2-, 1,3-, 1,4-1,6- and 1,8-dihydroxyoctane, 1,10-dihydroxydecane, glycerol, 1,2,4-trihydroxybutane, 1,2,6-trihydroxyhexane, 1,1,1-trimethylolethane, 1,1,1-trimethylolpropane, pentaerythritol, caprolactone, polycaprolactone, xylitol, arabitol, sorbitol, mannitol, or a mixture of any two or more thereof.

Other polyols which can be employed as a base polyol include the alkylene oxide adducts of non-reducing sugars, wherein the alkoxides have from 2 to 4 carbon atoms. Non-reducing sugars and sugar derivatives include sucrose, alkyl glycosides, such as methyl glycoside and ethyl glucoside, glycol glucosides, such as ethylene glycol glycoside, propylene glycol glucoside, glycerol glucoside, and 1,2,6-hexanetriol glucoside. Also suitable are alkylene oxide adducts of the alkyl glycosides as disclosed in U.S. Pat. No. 3,073,788, which is incorporated herein by reference.

Other polyols suitable for use as a base polyol include the polyphenols and the alkylene oxide adducts thereof wherein the alkylene oxides have from 2 to 4 carbon atoms. Among the polyphenols which are suitable include, for example bisphenol A, bisphenol F, condensation products of phenol and formaldehyde, the novolac resins, condensation products of various phenolic compounds and acrolein, including the 1,1,3-tris(hydroxyphenyl)propanes, condensation products of various phenolic compounds and glyoxal, glutaraldehyde, other dialdehydes, including the 1,1,2,2-tetrakis (hydroxyphenol)ethanes.

The alkylene oxide adducts of phosphorus and polyphosphorus acid are also useful as a base polyol. Suitable alkylene oxides for producing these polyols include ethylene oxide, 1,2-epoxypropane, the epoxybutanes, 3-chloro-1,2-epoxypropane, and mixtures of any two or more thereof. Phosphoric acid, phosphorus acid, the polyphosphoric acids, such as tripolyphosphoric acid, the polymetaphosphoric acids, as well as mixtures of any two or more thereof, are suitable for use in preparing such polyols.

Polyether carbonate polyols are also suitable for use as a base polyol. Polyether carbonate polyols can be prepared by catalytic copolymerization of carbon dioxide with one or more alkylene oxides, and optionally, an additional H-functional starter compound, in the presence of one or more catalysts. Examples of suitable polyether carbonate polyols and processes of preparing them are described in, for example, U.S. Pat. Nos. 7,977,501, 8,134,022, 8,933,192, 8,946,466, 9,045,592, 9,062,156, 9,080,010, 9,228,054, 9,260,562, 9,273,183, 9,309,356, 9,315,622, and 9,382,417.

It should also be appreciated that the base polyol may be a blend or mixtures of any of the various useful polyols.

As previously mentioned, the PMPOs of this specification comprise a reaction product of a reaction mixture comprising a PFS. Suitable PFS' include, without limitation, those discussed in, for example, U.S. Pat. Nos. 4,148,840, 5,196,476, 5,364,906, 5,990,185, 6,013,731, and 6,455,603.

In some implementations, the PFS is a free radical polymerization product of (1) a free radically polymerizable ethylenically unsaturated monomer and (2) a macromer having the average formula:

$$A^1(OR^1OX^1)_{n1}$$

wherein $A^1$ is an organic moiety, the free valence of which is ≥1, each $R^1$ is a divalent residue comprising an alkylene oxide moiety, n1 has a value of at least 1, such as 1 to 8, and each $X^1$ is hydrogen or an organic moiety containing reactive unsaturation, copolymerizable with $A^1$, in which about one $X^1$ is the organic moiety containing reactive unsaturation and any remaining $X^1$'s are hydrogen, in which the macromer may be further adducted with an organic polyisocyanate. More particularly, in some implementations, n1 has a value of greater than 3, such as at least 4, at least 5, or, in some cases, n1 has a value of 6.

Thus, in some cases, macromer (2) has the average formula:

$$A^1(OR^1OX^1)_{>3}$$

in which: $A^1$ is a polyvalent organic moiety, the free valence of which is >3 or has an average value of >3, and $R^1$ and $X^1$ are each as described earlier, in which the macromer may be further adducted with an organic polyisocyanate.

More specifically, in some cases, macromer (2) has the average formula:

$$A^1(OR^1OX^1)_{\geq 4}$$

in which: $A^1$ is a polyvalent organic moiety, the free valence of which is ≥4, or has an average value of ≥4, and $R^1$ and $X^1$ are each as described earlier, in which the macromer may be further adducted with an organic polyisocyanate.

Even more specifically, in some cases, macromer (2) has the average formula:

$$A^1(OR^1OX^1)_{\geq 5}$$

or

$$A^1(OR^1OX^1)_{\geq 6},$$

where $A^1$ is a polyvalent organic moiety, the free valence of which is ≥5 or ≥6, or has an average value of ≥5 or ≥6, as the case may be, and $R^1$ and $X^1$ are each as described earlier, in which the macromer may be further adducted with an organic polyisocyanate.

Some embodiments of such macromers (2) can be characterized as a reaction product of a free radically polymerizable ethylenically unsaturated monomer with a hydroxy-terminated alkylene oxide adduct, in which the hydroxy-terminated alkylene oxide adduct is an adduct of one or more "starter" polyols of the formula:

$$A^2(OH)_{n2}$$

in which n2 has a value of greater than 3, such as where n2 has a value of at least 4, at least 5, or at least 6, and $A^2$ is a polyvalent organic moiety, the free valence of which is n2, or an average value equal thereto, as the case may be. Illustrative of suitable "starter" polyols include, without limitation, pentaerythritol, sorbitol, diether of sorbitol, mannitol, diether of mannitol, arabitol, diether of arabitol, sucrose, oligomers of polyvinyl alcohol or glycidol, connected branched chain polyols, and mixtures of any two or more thereof.

To produce the hydroxy-terminated alkylene oxide adduct, the "starter" polyol is reacted with a 1,2-alkylene oxide, such as ethylene oxide, 1,2-propylene oxide, 1,2-butylene oxide or a mixture of any two or more thereof, in an amount and under conditions sufficient to convert hydroxyl groups to hydroxyalkyl groups. The amount of 1,2-alkylene oxide reacted is sufficient to achieve the ultimate molecular weight of the alkoxylated polyol adduct that is to be reacted with the free radically polymerizable ethylenically unsaturated monomer to form the macromer. In some cases, the hydroxy-terminated alkoxylated polyol adduct has a number average molecular weight of at least 3000 g/mol, such as (number average) at least 4000 g/mol, or at least 5000 g/mol. In some of these cases, the hydroxy-terminated alkoxylated polyol adduct has a number average molecular weight of up to 20,000 g/mol, up to 16,000 g/mol, up to 12,000 g/mol, or up to 10,000 g/mol. In some cases, the "starter" polyol is reacted with 1,2-propylene oxide in an amount sufficiently to create the desired polyol molecular weight. Then, the resulting polyol may be hydroxyethyl capped by reaction with 1,2-ethylene oxide to provide a desired primary hydroxyl content in the polyol.

To produce the macromer (2), the hydroxy-terminated alkylene oxide adduct is then reacted with a free radically polymerizable ethylenically unsaturated monomer that includes a reactive group that is reactive with hydroxy groups

present on the hydroxy-terminated alkylene oxide adduct to thereby introduce the desired degree of unsaturation on the macromer. Specific examples of suitable such compounds which contain reactive unsaturation are, without limitation, maleic anhydride, fumaric acid, dialkyl fumarates, dialkyl maleates, glycol maleates, glycol fumarates, isocyanatoethyl methacrylate, methyl methacrylate, hydroxyethyl methacrylate, acrylic and methacrylic acid and their anhydride, methacroyl chloride, and glycidyl methacrylate, vinylmethoxysilane, and combinations of any two or more thereof. Suitable compounds which contain reactive unsaturation also include reaction products of one or more molecules resulting in a structure with the desired qualities of a reactive unsaturated compound, such as reaction products of hydroxymethyl and/or hydroxyethyl methacrylate with a polyol by way of coupling through use of an organic polyisocyanate as described in, for example, U.S. Pat. No. 4,521,546, the disclosure of which is herein incorporated by reference, or by reaction with an unsaturated monoisocyanate such as, for example, 1,1-dimethyl-m-isopropenylbenzyl isocyanate. In some implementations, the compound which contains reactive unsaturation that is used to produce macromer (2) comprises an aliphatically unsaturated aryl or arylaliphatic isocyanate, such as where the aliphatically unsaturated aryl or arylaliphatic isocyanate is represented by the formula:

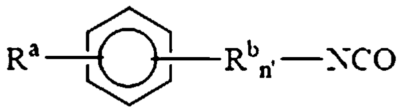

in which: (1) $R^a$ is an unsaturated substituted or unsubstituted aliphatic group; (2) $R^b$ is a substituted or unsubstituted $C_1$-$C_6$ alkylene group; and (3) n' has a value of 0 or 1. In some implementations $R^a$ is a substituted or unsubstituted allyl, methallyl, propenyl, isopropenyl, or vinyl group. In some implementations, $R^b$ is a substituted or unsubstituted methylene group, such as where $R^b$ is a 2,2-propylene (dimethylmethylene) group. Most specifically, in some cases, the aliphatically unsaturated aryl or arylaliphatic isocyanate comprises 3-isopropenyl-$\alpha$,$\alpha$-dimethylbenzyl isocyanate:

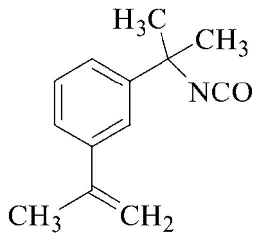

.

Other suitable PFS include those prepared using as precursor stabilizers compounds obtained by reacting: (1) a silicon atom containing compound corresponding to one of the formulas:

$$R_nSiX_{4-n};$$

or

$$R_nSi((-OSi(R^1)_2)_pX)_{4-n}$$

wherein: each R, which may be the same or different, represents a saturated or unsaturated hydrocarbyl group, with at least one R group being an olefinically unsaturated hydrocarbyl group, $R^1$ represents a hydrocarbyl group, X represents a $C_1$ to $C_{10}$ alkoxy group, n represents an integer from 1 to 3, and p is an integer greater than zero; with (2) a polyether polyol having an average molecular weight in greater than 400 g/mol and a hydroxyl number of 20 to 280 mg KOH/g, such as a reaction product of vinyltrimethoxysilane, vinyltriethoxysilane or vinyltripropoxysilane with a polyether polyol having an average molecular weight greater than 400 g/mol and a hydroxyl number of 20 to 280 mg KOH/g. Such precursor stabilizers are described in U.S. Pat. No. 4,883,832, the disclosure of which is herein incorporated by reference.

In some cases, the PFS is prepared by reacting a polyol, a macromer (also referred to as a "precursor stabilizer"), a monomer and a free-radical polymerization initiator in a reaction zone maintained at a temperature sufficient to initiate free radical polymerization, and under sufficient pressure to maintain only liquid phases in the reaction zone, for a period of time sufficient to react essentially all of the macromer and recovering a heterogeneous mixture containing the PFS, such as is described in U.S. Patent No. 5,990,185, the disclosure of which is herein incorporated by reference

Further, in some cases, the PFS is a reaction product of a reaction mixture comprising: (i) a macromer; (ii) a free radically polymerizable ethylenically unsaturated monomer, such as acrylonitrile and at least one other ethylenically unsaturated comonomer copolymerizable therewith; (iii) a free radical polymerization initiator; (iv) optionally, a polymer control agent in which (i), (ii), and (iii) are soluble, but in which the resultant PFS is essentially insoluble; and (v) optionally,

one or more polyols. As described in, for example, U.S. Patent No. 5,196,476, the disclosure of which is herein incorporated by reference, suitable PFS can be prepared by reacting a combination of components (i), (ii), (iii), (iv), and optionally (v), above, in a reaction zone maintained at a temperature sufficient to initiate a free radical reaction, and under sufficient pressure to maintain only liquid phases in the reaction zone, for a sufficient period of time to react (i), (ii) and (iii); and recovering a mixture containing the preformed stabilizer dispersed in the polymer control agent (iv).

Suitable compounds to be used as the macromer (i) include those macromers (2) described above.

Suitable free radically polymerizable ethylenically unsaturated monomers (ii) include, without limitation, aliphatic conjugated dienes, such as butadiene and isoprene; monovinylidene aromatic monomers, such as styrene, $\alpha$-methylstyrene, (t-butyl)styrene, chlorostyrene, cyanostyrene and bromostyrene; $\alpha,\beta$-ethylenically unsaturated carboxylic acids and esters thereof, such as acrylic acid, methacrylic acid, methyl methacrylate, ethyl acrylate, 2-hydroxyethyl acrylate, butyl acrylate, itaconic acid, and maleic anhydride; $\alpha,\beta$-ethylenically unsaturated nitriles and amides, such as acrylonitrile, methacrylonitrile, acrylamide, methacrylamide, N,N-dimethyl acrylamide, and N-(dimethylaminomethyl)acrylamide; vinyl esters, such as vinyl acetate; vinyl ethers; vinyl ketones; vinyl and vinylidene halides; among others, including mixtures of any two or more thereof. In some cases, the free radically polymerizable ethylenically unsaturated monomer (ii) comprises a monovinylidene aromatic monomer, such as styrene, and a ethylenically unsaturated nitrile, such as acrylonitrile. More particularly in some cases, the free radically polymerizable ethylenically unsaturated monomer (ii) comprises acrylonitrile and a comonomer in which acrylonitrile in present in an amount of at least 5 or at leasdt 15 % by weight, based on total weight of free radically polymerizable ethylenically unsaturated monomer (ii). In some embodiments, the comonomer comprises styrene, but methyl methacrylate or other monomers may be employed in place of part or all of the styrene. In some implementations, free radically polymerizable ethylenically unsaturated monomer (ii) used to make the PFS comprises a mixture of acrylonitrile and styrene, such as where acrylonitrile is present in an amount of at least 20% by weight, at least 25% by weight, or at least 30 % by weight, based on total weight of the mixture, and in an amount of no more than 80 % by weight, no more than 60% by weight, or no more than 55 % by weight, based on total weight of the mixture. Moreover, in some implementations, styrene is present in an amount of at least 20% by weight, at least 40% by weight, or at least 45% by weight, based on total weight of the mixture, and in an amount of no more than 80% by weight, no more than 75% by weight, or no more than 70% by weight, based on total weight of the mixture. Thus, suitable weight ratios of acrylonitrile to styrene in the mixture may vary from, for example, 20:80 to 80:20, or from 25:75 to 75:25, 30:70 to 70:30, 60:40 to 40:60, or 55:45 to 45:55. If only styrene and acrylonitrile are used, then the sum of the amounts of styrene and acrylonitrile is 100% of the mixture.

Free radical polymerization initiators suitable for use as the previously mentioned component (iii) to prepare the PFS encompass any free radical initiator suitable for grafting of an ethylenically unsaturated polymer to a polyol, such as, without limitation, peroxides, including both alkyl and aryl hydroperoxides, persulfates, perborates, percarbonates, and azo compounds. Some specific examples include hydrogen peroxide, di(t-butyl)-peroxide, t-butylperoxy diethyl acetate, t-butyl peroctoate, t-butyl peroxy isobutyrate, t-butyl peroxy 3,5,5-trimethyl hexanoate, t-butyl perbenzoate, t-butyl peroxy pivalate, t-amyl peroxy pivalate, t-butyl peroxy-2-ethyl hexanoate, lauroyl peroxide, cumene hydroperoxide, t-butyl hydroperoxide, azobis(isobutyronitrile), 2,2'-azo bis-(2-methylbutyronitrile), etc. In some cases, the free radical polymerization initiator includes those having a satisfactory half-life within the temperature ranges used to form the PFS, i.e., the half-life is 25 percent or less of the residence time in the reactor at a given temperature. Representative examples of useful initiator species include t-butyl peroxy-2-ethyl-hexanoate, t-butylperpivalate, t-amyl peroctoate, 2,5-dimethyl-hexane-2,5-di-per-2-ethyl hexanoate, t-butylperneodecanoate, and t-butylperbenzoate. Useful also are the azo catalysts, such as azobis-isobutyronitrile, 2,2'-azo bis-(2-methylbutyronitrile), and mixtures thereof. In some implementations, the free radical polymerization initiator (iii) to prepare the PFS comprises a peroxide, such as tertiary butyl peroctoate. In some embodiments, free radical polymerization initiator is present in an amount of 0.01 to 2% by weight, 0.05% to 1% by weight, or 0.1% to 0.3% by weight, based on total weight of the reaction mixture used to produce the PFS.

As previously indicated, in some embodiments, the reaction mixture used to produce the PFS includes a polymer control agent (iv) in which components (i), (ii), and (iii) are soluble, but in which the resultant PFS is essentially insoluble. Suitable polymer control agents (iv) for use in preparing the PFS include various mono-ols, i.e., monohydroxy alcohols, aromatic hydrocarbons, ethers, and mixtures thereof. Specific examples of suitable mono-ols, for example, are methanol, ethanol, n-propanol, isopropanol, n-butanol, sec-butanol, t-butanol, n-pentanol, 2-pentanol, 3-pentanol, and mixtures of any two or more thereof.

As indicated earlier, the reaction mixture used to produce the PFS may also include a polyol, such as any of the polyols described earlier. In some cases, the polyol (v) be the same as or equivalent to the polyol used in the formation of the macromer used to prepare the PFS.

In some particular embodiments, the PFS is a reaction product of a reaction mixture comprising: (i) a macromer, which is present in an amount of 10 to 40% by weight or 15 to 35% by weight; (ii) a free radically polymerizable ethylenically unsaturated monomer, such as acrylonitrile and at least one other ethylenically unsaturated comonomer copolymerizable therewith, which is present in an amount of 10 to 30% by weight or 15 to 25% by weight; (iii) a free radical polymerization initiator, which is present in an amount of 0.01 to 2% by weight, or 0.1 to 2% by weight; (iv) a polymer control agent in which

(i), (ii), and (iii) are soluble, but in which the resultant PFS is essentially insoluble, which is present in an amount of 30 to 80% by weight or 40 to 70% by weight; and (v) optionally, one or more polyols, which is present in an amount of 0 to 40% by weight or 0 to 20% by weight or 0.05 to 10% by weight, the weight percents being based on total weight of the reaction mixture used to form the PFS.

The process for producing the PFS can be similar to the process for making the PMPO. Suitable temperatures may vary from, for example, 80°C to 150°C, such as 115°C to 125°C. The catalyst and temperature should be selected so that the catalyst has a reasonable rate of decomposition with respect to the hold-up time in the reactor for a continuous flow reactor or the feed time for a semi-batch reactor. The mixing conditions employed can be those obtained using a back mixed reactor (e.g. a stirred flask or stirred autoclave). The actual agitation rate for the reactor can vary. For instance, the power input (i.e. the Installed Specific Agitator Power) for the reactor agitator can vary between 0.01 $kW/m^3$ to 10 $kW/m^3$ or higher in order to meet the mixing requirements of the specific polymerization. More efficient mixing can be obtained by use of an optional external pump around loop on the reactor section. For instance, a stream of reactor contents may be removed from the reactor bottom via external piping and returned to the top of the reactor (or vice versa) to enhance internal mixing of the components. This external loop may contain a heat exchanger if desired. The residence time within the external loop (which optionally contains a heat exchanger) and the turnover rate of the reactor can vary to meet the specific requirements of the polymerization conditions.

In some cases, the PFS comprises a dispersion in the diluent and any unreacted monomer in which the PFS is present as individual molecules or as groups of molecules in "micelles," or on the surface of small polymer particles.

As mentioned previously, the reaction mixture used to produce the PMPO includes an ethylenically unsaturated composition (c). The ethylenically unsaturated composition (c) comprises: (1) an ethylenically unsaturated compound of the formula (A):

$$Z\text{-}(A^5)_{n5}\text{-}OX^5 \qquad (A)$$

in which Z represents a hydrocarbyl residue selected from $C_4$-$C_{60}$ alkyl, aryl, and aralkyl, such as where Z represents a hydrocarbyl residue selected from $C_9$-$C_{30}$, alkyl, aryl and aralkyl (such as $C_4$-$C_{15}$ alkyl or $C_{12}$-$C_{15}$ alkyl, $A^5$ represents an oxyalkylene group, and n5 represents the average number of oxyalkylene groups and has a value such that the ethylenically unsaturated compound of formula (A) has a Mn of 1,000 to 12,000 g/mole, such as where n5 has a value of 2 to 500, 5 to 100, 10 to 30, or 10 to 25, or, where n5 has a value of 11 to 264, 62 to 173 or 97 to 127, and $X^5$ is a moiety that includes and an ethylenically unsaturated group; and (2) an ethylenically unsaturated compound that is different from ethylenically unsaturated compound (1).

In some implementations, the ethylenically unsaturated compound of formula (A) is a reaction product of (i) an ethylenically unsaturated compound comprising a hydroxyl-reactive group, and (ii) a polyether monol of the structure:

$$Z\text{-}(A^5)_{n5}\text{-}OH$$

in which Z, $A^5$, and n5 are each as described earlier. Thus, as will be appreciated in some cases, $X^5$ in formula (A) is a moiety that includes a urethane linkage and an ethylenically unsaturated group.

More specifically, in some embodiments, to produce the ethylenically unsaturated compound (1), a polyether monol as described above is reacted with an ethylenically unsaturated compound that comprises a hydroxyl-reactive group, *i.e.,* a reactive group that is reactive with the hydroxy group present on the polyether monol to thereby introduce the desired degree of unsaturation to the ethylenically unsaturated compound (1).

Specific examples of suitable such compounds which contain reactive unsaturation and a hydroxyl-reactive group are, without limitation, aliphatically unsaturated aryl or arylaliphatic isocyanates, such as where the aliphatically unsaturated aryl or arylaliphatic isocyanate is represented by the formula:

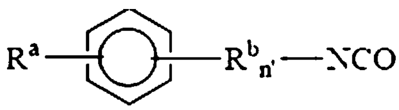

in which: (1) $R^a$ is an unsaturated substituted or unsubstituted aliphatic group; (2) $R^b$ is a substituted or unsubstituted $C_1$-$C_6$ alkylene group; and (3) n' has a value of 0 or 1. In some implementations $R^a$ is a substituted or unsubstituted allyl, methallyl, propenyl, isopropenyl, or vinyl group. In some implementations, $R^b$ is a substituted or unsubstituted methylene group, such as where $R^b$ is a 2,2-propylene (dimethylmethylene) group. Most specifically, in some cases, the aliphatically unsaturated aryl or arylaliphatic isocyanate comprises 3-isopropenyl-α,α-dimethylbenzyl isocyanate:

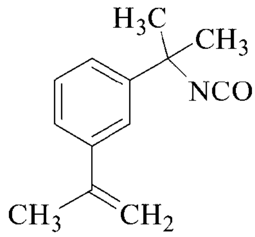

.

The polyether monol that is reacted with the ethylenically unsaturated compound that comprises a hydroxyl-reactive group to produce ethylenically unsaturated compound (1) that is present as part of ethylenically unsaturated compositon (c) may be an adduct of a "starter" monol that is reacted with a 1,2-alkylene oxide, such as ethylene oxide, 1,2-propylene oxide, 1,2-butylene oxide or a mixture of any two or more thereof, in an amount and under conditions sufficient to convert hydroxyl groups to hydroxyalkyl groups. The amount of 1,2-alkylene oxide reacted is sufficient to achieve the desired molecular weight of the polyether monol. In some cases, the "starter" alcohol is reacted with 1,2-propylene oxide in an amount sufficiently to create the desired polyether monol molecular weight.

In some cases, the monol "starter" comprises a compound represented by the structure:

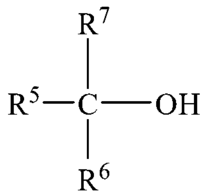

in which $R^5$, $R^6$, and $R^7$ each independently represent H, a $C_1$-$C_{56}$ alkyl group, a $C_6$-$C_{56}$ aryl group, a $C_3$-$C_{56}$ cycloalkyl group, or a $C_7$-$C_{56}$ aralkyl group, or the groups $R^5$, $R^6$, and/or $R^7$ may be linked via a ring system. In some implementations, any one or more of $R^5$, $R^6$ and $R^7$ may also represent any of the aforementioned groups that further contain functional groups that do not react with an isocyanate group. Examples of monols represented by the foregoing structure include primary alcohols, secondary alcohols, tertiary alcohols, or a combination of any two or more thereof, as well as aromatic monols, aliphatic monols, cycloaliphatic monols, or a combination of any two or more thereof, each of which may be saturated or unsaturated, cyclic, linear or branched. Such alcohols may contain 1 to 56, 1 to 36, 1 to 26, 10 to 15, or 12 to 15 carbon atoms. Specific examples of suitable monols include, without limitation, methanol, ethanol, n-propanol, isopropanol, n-butanol, isobutanol, n-pentanol, 2-hydroxypentane, 3-hydroxypentane, the isomeric primary and secondary methylbutyl alcohols, n-hexanol, n-heptanol, n-octanol, n-nonanol, 2-ethylhexanol, primary and secondary trimethylhexanols, cyclohexanol, alkyl substituted cyclohexanols, cyclopentanol, cyclohexylmethanol, phenol, alkyl substituted phenols (such as nonylphenol), benzyl alcohol, n-decanol, n-undecanol, n-dodecanol, n-tridecanol, n-tetradecanol, n-pentadecanol, n-hexadecanol, n-heptadecanol, n-octadecanol, n-non adecanol, n-eicosanol, n-hexacosanol, n-heptatricontanol, 2,2,4-trimethyl-1-pentanol, 2,6,8-trimethylnonanol, 4-cyclohexyl-1-butanol, 2,4,6-trimethylbenzyl alcohol, 2-methylpropan-2-ol, 2-ethyl-1-butanol, 2-methyl-2-butanol, 2-methyl-3-butene-2-ol, 2-methyl-1-pentanol, 2-methyl-2-pentanol, 3-methyl-3-pentanol, 3-ethyl-3-pentanol, 3-ethyl-3-nonanol, 3-methyl-1-butyn-3-ol, 3-methyl-1-pentyn-3-ol, 2,6-dimethyl-4-heptanol, 3,5-dimethyl-1-hexanol, 3,5-dimethyl-1-hexyn-3-ol, 1-methylcyclopentanol, 1-methylcyclohexanol, 1-ethylcyclohexanol, 1,1-diphenylethnal, 1,1,2-triphenylethanol, t-butyl alcohol, 3-isopropenylcumenol, 2-hydroxystyrene, 3-hydroxytyrene, 4-hydroxystyrene, 4-isopropenylcumenol, 3-isopropenylphenol, 4-isopropenylphenol, p-hydroxy-$\alpha$-phenylstyrene, p-hydroxy-$\beta$-phenylstyrene, 4-hydroxy-$\alpha$-ethylstyrene, $\alpha$-chloromethyl-p-hydroxystyrene, allyl alcohol, 2-allylphenol, 2-allyl-6-methylphenol, cinamyl alcohol, undecelenyl alcohols, diallylamines, acrylic acids, undecylenic acid, 9-hexadecen-1-ol, 9-octadecen-1-ol, and 10-eicosen-1-ol, as well as mixtures of any two or more thereof. In some implementations, the monol comprises a blend of $C_{12}$, $C_{13}$, $C_{14}$ and $C_{15}$ primary alcohols which is commercially available from Shell as Neodol 25.

As indicated earlier, in the polyether monol described above, n5 represents the average number of oxyalkylene groups and has a value such that the polyether monol has a Mn of 1,000 to 12,000 g/mole or where the polyether monol has an OH number of 3.8 mg KOH/g to 56.0 mg KOH/g. In some embodiments, n5 has a value such that the polyether monol has a Mn of at least 2,000 g/mol, at least 3,000 g/mol, at least 4,000 g/molor at least 5,000 g/mol, and no more than 12,000 g/mol, no more than 10,000 g/mol, no more than 8,000 g/mol, or no more than 7,000 g/mol or where the polyether monol has an OH number of at most 28 mg KOH/g, at most 18.5 mg KOH/g, at most 14 mg KOH/g or at most 11.2 mg KOH/g, and at least 4.7 mg KOH/g, at least 5.6 mg KOH/g, at least 7.0 mg KOH/g, or at least 8.0 mg KOH/g.

Any of a variety of conditions can be used to prepare ethylenically unsaturated compound (1). For example, in some cases, the polyether monol and the aliphatically unsaturated aryl or arylaliphatic isocyanate are reacted at a

temperature of 50°C to 100°C. such as 60°C to 90°C, with such reaction, in some cases, taking place in the presence of any catalyst, such as an amine and/or tin based catalyst, that catalyzes the urethane forming reaction of isocyanate groups with hydroxyl groups. In some embodiments, the polyether monol and the aliphatically unsaturated aryl or arylaliphatic isocyanate are present in relative amounts to result in an approximately equal number of hydroxyl groups to isocyanate groups. For example, in some cases, there may be 0.5 to 1.5, 0.8 to 1.2, or 0.9. to 1.1 hydroxyl groups present per isocyanate group.

In some implementations of the PMPOs of this specification, ethylenically unsaturated compound (1) is present in an amount of 0.1 to 10%, such as 0.1 to 5% by weight or 0.1 to 3% by weight, based on total weight of the ethylenically unsaturated composition (c). Ethylenically unsaturated compound (1) is distinct from, and is in addition to, any macromer used to produce PFS (b). In some cases, ethylenically unsaturated compound (1) is present in an amount of 10 to 75%, such as 20 to 65% by weight, based on total combined weight of ethylenically unsaturated compound (1) and macromer used to prepare the PFS.

As indicated earlier, ethylenically unsaturated composition (c) also comprises an ethylenically unsaturated compound (2) that is different from ethylenically unsaturated compound (1) described above. Any of a variety of compounds may be used as ethylenically unsaturated compound (2) including, for example, aliphatic conjugated dienes, such as butadiene and isoprene, monovinylidene aromatic monomers, such as styrene, $\alpha$-methyl-styrene, (t-butyl) styrene, chlorostyrene, cyanostyrene and bromostyrene; $\alpha,\beta$-ethylenically unsaturated carboxylic acids and esters thereof, such as acrylic acid, methacrylic acid, methyl methacrylate, ethyl acrylate, 2-hydroxyethyl acrylate, butyl acrylate, itaconic acid, and maleic anhydride, $\alpha,\beta$-ethylenically unsaturated nitriles and amides, such as acrylonitrile, methacrylonitrile, acrylamide, methacrylamide, N,N-dimethyl acrylamide, and N-(dimethylaminomethyl)-acrylamide, vinyl esters, such as vinyl acetate, vinyl ethers, vinyl ketones, and vinyl and vinylidene halides, among others. Of course, mixtures of two or more of the aforementioned monomers are also suitable. In some embodiments, the ethylenically unsaturated compound (2) comprises at least one of styrene and its derivatives, acrylonitrile, methyl acrylate, methyl methacrylate, and vinylidene chloride. In some embodiments, ethylenically unsaturated compound (2) comprises styrene and acrylonitrile, such as where styrene and acrylonitrile are used in sufficient amounts such that the weight ratio of styrene to acrylonitrile (S:AN) is within the range of 80:20 to 20:80, such as 75:25 to 25:75. Furthermore, in some cases, the S:AN ratio is relatively high, such as where styrene is present in an amount of more than 70% by weight, such as at least 75% by weight, at least 80% by weight, or at least 85% by weight and acrylonitrile is present in an amount of less than 30% by weight, such as no more than 25% by weight, no more than 20% by weight, or no more than 15% by weight, the weight percents being based on total combined weight of styrene and acrylonitrile. In fact, it was surprisingly discovered that the processes of this specification can enable production of PMPOs using such relatively high S:AN ratios while, at least in some cases, producing a PMPO with a monomodal particle size distribution, acceptable filterability, and a similar mean particle size and viscosity relative to a compositionally similar PMPO that otherwise has with a significantly lower S:AN ratio. As a result, it is currently believed that the inventions of this specification can provide a desirable means to reduce "scorch" formation in slabstock buns.

It was a surprising and unexpected discovery that when producing a PMPO using the foregoing "dual" stabilization approach in which stabilization of the polymer particles by PFS (b) is "supplemented" by the presence of ethylenically unsaturated compound (1) in ethylenically unsaturated composition (c) during the reaction thereof in the presence of base polyol (a), it was possible to reduce the mean particle size (while maintaining a monomodal particle size distribution) of the solid polymer particles in a PMPO relative to a compositionally similar PMPO in which such "dual" stabilization is not used. Moreover, it was possible, in some cases at least, to achieve this reduction in mean particle while having no significant detrimental impact on other PMPO characteristics, such as viscosity, polymer solids content, and filterability. It was also observed, as described above, that use of the foregoing "dual" stabilization approach can enable production of PMPOs using increased S:AN ratios while, at least in some cases, producing a PMPO with a monomodal particle size distribution, and a similar mean particle size and viscosity relative to a compositionally similar PMPO that otherwise has with a significantly lower S:AN ratio. Such increased S:AN ratios, it is currently believed, can provide a desirable means to reduce "scorch" formation in slabstock buns.

In some implementations, the reaction mixture used to produce the PMPO also includes a free-radical polymerization initiator (d). Suitable such free-radical initiators include, for example, any of those described previously with respect to the production of the PFS. In certain implementations, the free-radical initiator is present in the reaction mixture used to produce the PMPO in an amount of 0.01 to 2% by weight, based on 100% by weight of the final PMPO.

In some implementations, the reaction mixture used in preparing the PMPO further comprises a chain transfer agent (f). Examples of suitable chain transfer agents are mercaptans, such as dodecane thiol, ethane thiol, octane thiol, and toluene thiol, halogenated hydrocarbons, such as carbon tetrachloride, carbon tetrabromide, and chloroform, amines, such as diethylamine, and enol-ethers. In some embodiments, if used, the chain transfer agent is used in an amount of 0.1 to 2% by weight, such as 0.2 to 1% by weight, based on the total weight of the reaction mixture used to produce the PMPO.

The PMPOs described herein can be made using a variety of processes (including continuous and semi-batch) and reactor configuration known to be suitable to prepare PMPOs, such as, for example, a two-stage reaction system

comprising a continuously stirred tank reactor (CSTR) fitted with impeller(s) and baffles (first-stage) and a plug-flow reactor (second stage). Furthermore, the reaction system can utilize a wide range of mixing conditions. The reaction system may be characterized by energy inputs of from 0.5 to 350 horsepower per 1000 gallons, such as 2 to 50 horsepower per 1000 gallons on average for the bulk phase volume of each reactor as a particularly useful mixing power input. Mixing can be provided by any combination of impeller(s) and pump-around loop/jet mixing. The mixing conditions employed can be those obtained using a back mixed reactor (e.g. a stirred flask or stirred autoclave). The actual agitation rate for the reactor can vary. For instance, the power input (i.e. the Installed Specific Agitator Power) for the reactor agitator can vary between 0.01 kW/m3 to 10 kW/m3 or higher in order to meet the mixing requirements of the specific polymerization. More efficient mixing can be obtained by use of an external pump around loop on the reactor section. For instance, a stream of reactor contents may be removed from the reactor bottom via external piping and returned to the top of the reactor (or vice versa) to enhance internal mixing of the components. This external loop may contain a heat exchanger if desired. The residence time within the external loop (which optionally contains a heat exchanger) and the turnover rate of the reactor can vary to meet the specific requirements of the polymerization conditions. For example, in some cases, a ratio of reactor system residence time to recirculation loop residence time may be 10 to 93 in which: (A) reactor system residence time = $(R_v + L_v) / R_{thru}$; and (B) recirculation loop residence time = $(R_v + L_v) / L_p$, in which: (1) $R_v$ is the volume, in cubic meters, of the continuous stirred tank reactor; (2) $L_v$ is the volume, in cubic meters, of the recirculation loop; (3) $R_{thru}$ is the reactor volumetric throughput in cubic meter per hour; and (4) $L_p$ is the volumetric flow rate of reactor contents through the recirculation loop in cubic meters per hour, as described in United States Provisional Patent Application Serial No. 63/653,275, which is incorporated herein by reference. In addition, such PMPOs can be prepared from various types and combinations of axially and/or radially/tangentially acting impellers including, but not limited to, 4-pitched-blade, 6-pitched-blade, 4-flat-blade, 6-flat-blade, pitched-blade turbine, flat-blade turbine, Rushton, Maxflow, propeller, etc. For a continuous production process to prepare PMPOs, a residence time ranging of 20 to 180 minutes for the first reactor may be particularly useful.

In some implementations, the reactants are pumped from feed tanks through an in-line static mixer, and then, through a feed tube into the reactor. It may be useful to prepare a premix of the initiator (d) with part of the base polyol (a) stream. In general, feed stream temperatures are ambient (25°C). However, if desired, feed streams can be heated prior to mixing and entering the reactor. Other process conditions, which may be useful, include cooling of the feed tube in the reactor. Furthermore, the suitable reaction conditions for PMPOs in general may be characterized by a reaction temperature of 80 to 200°C and a pressure of 20 to 80 psig. Typically, the product is then treated in a single or multi staged stripping step to remove volatiles before entering a stage, which can essentially be any combination of filtration and/or product cooling.

In many cases, the PMPOs are produced by utilizing a low monomer to polyol ratio which is maintained throughout the reaction mixture during the process. This can be achieved by employing conditions that provide rapid conversion of monomer to polymer. In practice, a low monomer to polyol ratio is maintained, in the case of semi-batch and continuous operation, by control of the temperature and mixing conditions and, in the case of semibatch operation, also by slowly adding the monomers to the polyol. The temperature range is not critical and may vary from, for example, 80°C to 200°C, 100°C to 140°C, or, in some cases, 115°C to 125°C.

One suitable continuous process for making PMPOs as described above comprises (1) providing a heterogenous mixture of the PFS(c)), and, optionally, liquid diluent, in combination with a base polyol (a), ethylenically unsaturated composition (c), and a free radical polymerization initiator (d), (2) in a reaction zone maintained at a temperature sufficient to initiate a free radical reaction, and under sufficient pressure to maintain only liquid phases in the reaction zone, for a period of time sufficient to react at least a major portion of the ethylenically unsaturated monomer (c) to form a heterogenous mixture containing the enhanced PMPO, unreacted monomers and diluent, and stripping the unreacted monomers and diluent from the enhanced PMPO to recover the unreacted monomers and diluent. When utilizing such a continuous process, it is preferred that the reactors be operated liquid-full, i.e., no appreciable free vapor space.

Following polymerization, volatile constituents, in particular those from the PCA and residues of monomers are generally stripped from the product by, for example, vacuum distillation, such as in a thin layer of a falling film evaporator. The monomer-free product may be used as is or may be filtered to remove any large particles that may have been created.

Certain embodiments of this specification are directed to polyurethane foams produced using the PMPOs described above, as well to methods of manufacturing such polyurethane foams. As will be appreciated, polyurethane foams can be produced from reacting a reaction mixture comprising: (1) a polyisocyanate component and (2) an isocyanate-reactive component. The isocyanate-reactive component may comprise any of the PMPOs described above. In addition, the isocyanate-reactive component may include: (i) other polyols, such as a polyether polyol having a functionality of from 2 to 6, an OH number of from 18 to 238, and a number average molecular weight of from 160 to 8000, (ii) a blowing agent, (iii) a catalyst, and (iv) a surfactant.

Suitable blowing agents include halogenated hydrocarbons, halogenated olefins, water, liquid carbon dioxide, low boiling solvents such as, for example, pentane, and other known blowing agents. In some embodiments, the blowing

agent comprises, or consists of, water. In certain implementations, blowing agent is used in an amount of 1 to 7 parts, such as 1 to 5 parts, by weight, based on the total weight of the isocyanate-reactive component.

Suitable catalysts include amine and tin based catalysts, such as diethylenetriamine, triethylenediamine, bis(2,2'-di-methylamino)ethyl ether, N,N,N',N",N"-pentamethyldiethylenetriamine, dibutyltin dilaurate, dibutyltin diacetate, and stannous octoate, and the like. In certain implementations, catalyst is used in an amount of 0.001 to 2 parts by weight, based on the total weight of the isocyanate-reactive component.

In addition, the isocyanate-reactive component may, if desired, include a low molecular weight chain extender and/or cross-linking agent which has a molecular weight of, for example, below 300 Da. Examples include, but are not limited to, glycerine, pentaerythritol, ethylene glycol, sorbitol, and alkanolamines, such as monoethanolamine, diethanolamine (DEOA) and triethanolamine (TEOA). In certain implementations, such chain extender and/or cross-linking agent is used in an amount of up to 5 parts per by weight, such as 0.4 to 3.5 parts by weight, based on the total weight of the isocyanate-reactive component.

Suitable surfactants include, but are not limited to, commercially available polyetherpolysiloxane foam stabilizers.

The polyurethane foam can be prepared by reacting the polyisocyanate component with the isocyanate-reactive component, wherein the polyisocyanate component is present in an amount sufficient to, for example, provide an isocyanate index of 70 to 130, such as 80 to 120 or 90 to 115.

The preparation of free rise foams typically entails mixing all components (except for the isocyanate components) together, then adding the isocyanate component to the mixture and briefly mixing. The mixture is then poured into a box and allowed to rise freely. Settling of the foam is measured, and it is oven cured at, for example, 125°C for 5 minutes. After 16 hours at room temperature, shrinkage is noted and the foam properties can then be determined by various tests.

The preparation of molded foams typically involves pre-mixing the polyol components along with additives. The isocyanate component is then added to the pre-mix in a sufficient amount to the desired isocyanate index. The reaction mixture is then dispensed by hand or machine into a metal mold which is typically preheated to a temperature of 62 to 66°C. The reaction mixture foams to fill the mold and, after 4 to 5 minutes, the foam is removed from the mold and (physically) crushed to ensure that all cells were opened; and then aged for 2 hours.

Various aspects of the subject matter described herein are set out in the following numbered paragraphs:

Paragraph 1. A polymer polyol (PMPO) comprising a dispersion of polymer particles in a base polyol, wherein the PMPO comprises a reaction product of a reaction mixture comprising: (a) the base polyol; (b) a pre-formed stabilizer (PFS); and (c) an ethylenically unsaturated composition comprising: (1) an ethylenically unsaturated compound of the formula (A):

$$Z\text{-}(A^5)_{n5}\text{-}OX^5 \qquad (A)$$

in which Z represents a hydrocarbyl residue selected from $C_4$-$C_{60}$ alkyl, aryl, and aralkyl, such as where Z represents a hydrocarbyl residue selected from $C_9$-$C_{30}$, alkyl, aryl and aralkyl (such as $C_4$-$C_{15}$ alkyl or $C_{12}$-$C_{15}$ alkyl, $A^5$ represents an oxyalkylene group, and n5 represents the average number of oxyalkylene groups and has a value such that the polyether monol has a Mn of 1,000 to 12,000 g/mole, such as where n5 has a value of 2 to 500, 5 to 100, 10 to 30, or 10 to 25, or, where n5 has a value of 11 to 264, 62 to 173 or 97 to 127, and $X^5$ is a moiety that includes and an ethylenically unsaturated group; and (2) an ethylenically unsaturated compound that is different from ethylenically unsaturated compound (1).

Paragraph 2. The PMPO of paragraph 1, wherein the PMPO has a solids content of 30% by weight to 75% by weight, 35% by weight to 70% by weight, 40% by weight to 60% by weight, or 45% by weight to 55% by weight, or 48% by weight to 50% by weight, based on the total weight of the PMPO.

Paragraph 3. The PMPO of paragraph 1 or paragraph 2, wherein the PMPO has a viscosity of less than 50,000 mPa·s, less than 40,000 mPa·s, less than 30,000 mPa·s, less than 20,000 mPa·s, less than 15,000 mPa·s, or less than 10,000 mPa·s and at least 1,000 mP·s, at least 2,000 mPa·s, at least 3,000 mPa·s, or at least 4,000 mPa·s. such as where the PMPO has a viscosity of 1,000 to 8,000 mP·s, 2,000 to 7,000 mPa·s, 3,000 to 6,000 mPa·s, or 4,000 to 5,000 mPa·s.

Paragraph 4. The PMPO of one of paragraph 1 to paragraph 3, wherein the PMPO exhibits a monomodal particle size distribution.

Paragraph 5. The PMPO of one of paragraph 1 to paragraph 4, wherein the polymer particles of the PMPO have a volume-based mean particle size of no more than 1.5 μm, 0.1 to 1.5 μm, 0.1 to 1.2 μm, 0.1 to 1.05 μm, 0.5 to 1.0 μm, 0.60 to 0.90 μm, 0.70 to 0.90 μm, 0.80 to 0.90 μm, 0.60 to 0.80 μm, or 0.70 to 0.80 μm.

Paragraph 6. The PMPO of one of paragraph 1 to paragraph 5, wherein the PMPO exhibits good filterability.

Paragraph 7. The PMPO of one of paragraph 1 to paragraph 6, wherein the base polyol has a functionality of 2 to 8, 2 to 6, 3 to 6, 3 to 5, or 4 to 6, and an OH number of 20 to 400 mg KOH/g, 20 to 200 mg KOH/g, 20 to 150 mg KOH/g, 20 to 100

mg KOH/g, 20 to 75 mg KOH/g, 20 to 50 mg KOH/g, 25 to 50 mg KOH/g, or 30 to 50 mg KOH/g.

Paragraph 8. The PMPO of paragraph 7, wherein the base polyol has a number average molecular weight of 600 to 15,000 g/mol, 2,000 to 12,000 g/mol, or 3,000 to 8,000 g/mole.

Paragraph 9. The PMPO of one of paragraph 1 to paragraph 8, wherein the base polyol comprises a polyether polyol prepared by basic catalysis, or a low unsaturation polyether polyol prepared using double metal cyanide ("DMC") catalyst.

Paragraph 10. The PMPO of one of paragraph 1 to paragraph 9, wherein the PFS is a free radical polymerization product of: (1) a free radically polymerizable ethylenically unsaturated monomer; and (2) a macromer having the average formula:

$$A^1(OR^1OX^1)_{n1}$$

wherein A is an organic moiety, the free valence of which is ≥1, each $R^1$ is a divalent residue comprising an alkylene oxide moiety, n1 has a value of at least 1, such as 1 to 8, and each X1 is hydrogen or an organic moiety containing reactive unsaturation, copolymerizable with $A^1$, in which about one of such X is the organic moiety containing reactive unsaturation and any remaining $X^1$'s are hydrogen.

Paragraph 11. The PMPO of paragraph 10, wherein n1 has a value of greater than 3 to 8, such as 4 to 8, 5 to 8, 6 to 8, or 6.

Paragraph 12. The PMPO of paragraph 10 or paragraph 11, wherein the macromer (2) is a reaction product of a free radically polymerizable ethylenically unsaturated monomer and a hydroxy-terminated alkylene oxide adduct, in which the hydroxy-terminated alkylene oxide adduct is an adduct of one or more starter polyols of the formula:

$$A^2(OH)_{n2}$$

in which n2 has a value of greater than 3 to 8, such as where n2 has a value of 4 to 8, 5 to 8, 6 to 8, or 6, and $A^2$ is a polyvalent organic moiety, the free valence of which is n2, or an average value equal thereto.

Paragraph 13. The PMPO of paragraph 12, wherein the hydroxy-terminated alkoxylated polyol adduct has a number average molecular weight of at least 3000 g/mol, at least 4000 g/mol, or at least 5000 g/mol and up to 20,000 g/mol, up to 16,000 g/mol, up to 12,000 g/mol, or up to 10,000 g/mol.

Paragraph 14. The PMPO of paragraph 12 or paragraph 13, wherein the free radically polymerizable ethylenically unsaturated monomer used to produce the macromer (2) comprises a reactive group that is reactive with hydroxy groups present on the hydroxy-terminated alkylene oxide adduct, such as where the free radically polymerizable ethylenically unsaturated monomer used to produce the macromer (2) comprises maleic anhydride, fumaric acid, a dialkyl fumarate, a dialkyl maleate, a glycol maleate, a glycol fumarate, isocyanatoethyl methacrylate, methyl methacrylate, hydroxyethyl methacrylate, acrylic and/or methacrylic acid and their anhydride, methacroyl chloride, glycidyl methacrylate, vinylmethoxysilane, or a combination of any two or more thereof.

Paragraph 15. The PMPO of one of paragraph 12 to paragraph 14, wherein the free radically polymerizable ethylenically unsaturated monomer used to produce the macromer (2) comprises an aliphatically unsaturated aryl or arylaliphatic isocyanate, such as where the aliphatically unsaturated aryl or arylaliphatic isocyanate is represented by the formula:

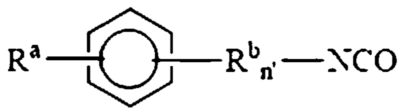

in which: (1) $R^a$ is an unsaturated substituted or unsubstituted aliphatic group, such as where $R^a$ is a substituted or unsubstituted allyl, methallyl, propenyl, isopropenyl, or vinyl group ; (2) $R^b$ is a substituted or unsubstituted $C_1$-$C_6$ alkylene group, such as where $R^b$ is a substituted or unsubstituted methylene group, such as where $R^b$ is a 2,2-propylene (dimethylmethylene) group; and (3) n' has a value of 0 or 1.

Paragraph 16. The PMPO of paragraph 15, wherein the aliphatically unsaturated aryl or arylaliphatic isocyanate comprises:

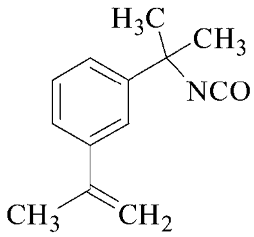

Paragraph 17. The PMPO of one of paragraph 10 to paragraph 16, wherein the PFS is a reaction product of a reaction mixture comprising: (i) a macromer; (ii) a free radically polymerizable ethylenically unsaturated monomer; (iii) a free radical polymerization initiator; (iv) optionally, a polymer control agent in which (i), (ii), and (iii) are soluble, but in which the resultant PFS is essentially insoluble; and (v) optionally, one or more polyols, such as where the PFS is prepared by reacting a combination of components (i), (ii), (iii), (iv), and optionally (v), in a reaction zone maintained at a temperature sufficient to initiate a free radical reaction, and under sufficient pressure to maintain only liquid phases in the reaction zone, for a sufficient period of time to react (i), (ii) and (iii); and recovering a mixture containing the preformed stabilizer dispersed in the polymer control agent (iv).
Paragraph 18. The PMPO of paragraph 17, wherein the free radically polymerizable ethylenically unsaturated monomer (ii) comprises a monovinylidene aromatic monomer, such as styrene, and a ethylenically unsaturated nitrile, such as acrylonitrile, such as where the free radically polymerizable ethylenically unsaturated monomer (ii) comprises a mixture of acrylonitrile and styrene, such as where the mixture has a weight ratio of acrylonitrile to styrene of 20:80 to 80:20, 25:75 to 75:25, 30:70 to 70:30, 60:40 to 40:60, or 55:45 to 45:55.
Paragraph 19. The PMPO of paragraph 17 or paragraph 18, wherein the PFS is a reaction product of a reaction mixture comprising: (i) a macromer, which is present in an amount of 10 to 40% by weight or 15 to 35% by weight; (ii) a free radically polymerizable ethylenically unsaturated monomer, such as acrylonitrile and at least one other ethylenically unsaturated comonomer copolymerizable therewith, which is present in an amount of 10 to 30% by weight or 15 to 25% by weight; (iii) a free radical polymerization initiator, which is present in an amount of 0.01 to 2% by weight, or 0.1 to 2% by weight; (iv) a polymer control agent in which (i), (ii), and (iii) are soluble, but in which the resultant PFS is essentially insoluble, which is present in an amount of 30 to 80% by weight or 40 to 70% by weight; and (v) optionally, one or more polyols, which is present in an amount of 0 to 40% by weight or 0 to 20% by weight or 0.05 to 10% by weight, the weight percents being based on total weight of the reaction mixture used to form the PFS.
Paragraph 20. The PMPO of one of paragraph 1 to paragraph 19, wherein X in formula (A) is a moiety that includes a urethane linkage and an ethylenically unsaturated group.
Paragraph 21. The PMPO of one of paragraph 1 to paragraph 20, wherein the ethylenically unsaturated compound of formula (A) is a reaction product of (i) an ethylenically unsaturated compound comprising a hydroxyl-reactive group, and (ii) a polyether monol of the structure:

$$Z\text{-}(A^5)_{n5}\text{-}OH$$

in which Z represents a hydrocarbyl residue selected from $C_4$-$C_{60}$ alkyl, aryl, and aralkyl, such as where Z represents a hydrocarbyl residue selected from $C_9$-$C_{30}$, alkyl, aryl and aralkyl (such as $C_4$-$C_{15}$ alkyl or $C_{12}$-$C_{15}$ alkyl, $A^5$ represents an oxyalkylene group, and n5 represents the average number of oxyalkylene groups and has a value such that the polyether monol has a Mn of 1,000 to 12,000 g/mole such as where n5 has a value of 2 to 500, 5 to 100, 10 to 30, or 10 to 25, or, where n5 has a value of 11 to 264, 62 to 173 or 97 to 127.
Paragraph 22. The PMPO of paragraph 21, wherein the ethylenically unsaturated compound comprising a hydroxyl-reactive group used to produce the ethylenically unsaturated compound of formula (A) comprises an aliphatically unsaturated aryl or arylaliphatic isocyanate, such as where the aliphatically unsaturated aryl or arylaliphatic isocyanate is represented by the formula:

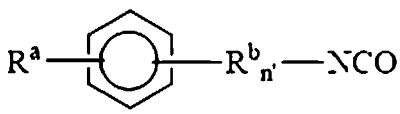

in which: (1) $R^a$ is an unsaturated substituted or unsubstituted aliphatic group, such as where $R^a$ is a substituted or unsubstituted allyl, methallyl, propenyl, isopropenyl, or vinyl group; (2) $R^b$ is a substituted or unsubstituted $C_1$-$C_6$ alkylene group, such as where $R^b$ is a substituted or unsubstituted methylene group, such as where $R^b$ is a 2,2-propylene (dimethylmethylene) group; and (3) n' has a value of 0 or 1.
Paragraph 23. The PMPO of paragraph 22, wherein the aliphatically unsaturated aryl or arylaliphatic isocyanate

comprises:

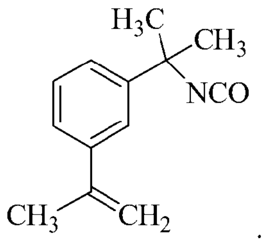

Paragraph 24. The PMPO of one of paragraph 21 to paragraph 23, wherein the polyether monol is an adduct of a monol reacted with a 1,2-alkylene oxide, such as ethylene oxide, 1,2-propylene oxide, 1,2-butylene oxide or a mixture of any two or more thereof.

Paragraph 25. The PMPO of paragraph 24, wherein the monol comprises a compound represented by the structure:

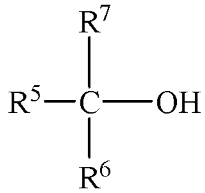

in which $R^5$, $R^6$, and $R^7$ each independently represent H, a $C_1$-$C_{56}$ alkyl group, a $C_6$-$C_{56}$ aryl group, a $C_3$-$C_{56}$ cycloalkyl group, or a $C_7$-$C_{56}$ aralkyl group, or the groups $R^5$, $R^6$, and/or $R^7$ may be linked via a ring system, in which any one or more of $R^5$, $R^6$ and $R^7$ may also represent any of the aforementioned groups that further contain functional groups that do not react with an isocyanate group, such as where the monol comprises a primary alcohol, a secondary alcohol, a tertiary alcohol, or a combination of any two or more thereof, an aromatic monol, an aliphatic monol, a cycloaliphatic monol, or a combination of any two or more thereof, each of which may be saturated or unsaturated, cyclic, linear or branched, such as where the monol contains 1 to 56, 1 to 36, 1 to 26, 10 to 15, or 12 to 15 carbon atoms, such as where the monol comprises a blend of $C_{12}$, $C_{13}$, $C_{14}$ and $C_{15}$ primary alcohols.

Paragraph 26. The PMPO of one of paragraph 21 to paragraph 25, wherein the polyether monol has a Mn of at least 2,000 g/mol, at least 3,000 g/mol, at least 4,000 g/mol or at least 5,000 g/mol, and no more than 12,000 g/mol, no more than 10,000 g/mol, no more than 8,000 g/mol, or no more than 7,000 g/mol or where the polyether monol has an OH number of at most 28 mg KOH/g, at most 18.5 mg KOH/g, at most 14 mg KOH/g or at most 11.2 mg KOH/g, and at least 4.7 mg KOH/g, at least 5.6 mg KOH/g, at least 7.0 mg KOH/g, or at least 8.0 mg KOH/g.

Paragraph 27. The PMPO of one of paragraph 22 to paragraph 26, wherein the polyether monol and the aliphatically unsaturated aryl or arylaliphatic isocyanate are present in relative amounts to result in 0.5 to 1.5, 0.8 to 1.2, or 0.9. to 1.1 hydroxyl groups present per isocyanate group.

Paragraph 28. The PMPO of one of paragraph 1 to paragraph 27, wherein the ethylenically unsaturated compound (1) is present in an amount of 0.1 to 10%, such as 0.1 to 5% by weight or 0.1 to 3% by weight, based on total weight of the ethylenically unsaturated composition (c).

Paragraph 29. The PMPO of one of paragraph 1 to paragraph 28, wherein the ethylenically unsaturated compound (1) is present in an amount of 10 to 75 %, such as 20 to 65% by weight, based on total combined weight of ethylenically unsaturated compound (1) and macromer used to prepare the PFS.

Paragraph 30. The PMPO of one of paragraph 1 to paragraph 29, wherein ethylenically unsaturated compound (2) that is different from ethylenically unsaturated compound (1) comprises styrene and acrylonitrile, such as where styrene and acrylonitrile are used in sufficient amounts such that the weight ratio of styrene to acrylonitrile (S:AN) is within the range of 80:20 to 20:80, such as 75:25 to 25:75, such as where styrene is present in an amount of more than 70% by weight, at least 75% by weight, at least 80% by weight, or at least 85% by weight and acrylonitrile is present in an amount of less than 30% by weight, no more than 25% by weight, no more than 20% by weight, or no more than 15% by weight, the weight percents being based on total combined weight of styrene and acrylonitrile.

Paragraph 31. The PMPO of one of paragraph 1 to paragraph 30, wherein the reaction mixture used to produce the PMPO also includes a free-radical polymerization initiator (d).

Paragraph 32. The PMPO of one of paragraph 1 to paragraph 31, wherein the reaction mixture used to prepare the PMPO further comprises a chain transfer agent (f).

Paragraph 33. A polyurethane foam-forming composition comprising: (1) a polyisocyanate component and (2) an isocyanate-reactive component comprising a PMPO of one of paragraph 1 to paragraph 31.

Paragraph 34. The polyurethane foam-forming composition of paragraph 33, wherein the isocyanate-reactive component further comprises a polyol, different from the PMPO of one of paragraph 1 to paragraph 31, such as a polyether polyol having a functionality of from 2 to 6, an OH number of from 18 to 238, and a number average molecular weight of from 160 to 8000.

Paragraph 35. The polyurethane foam-forming composition of paragraph 33 or paragraph 34, further comprising a blowing agent, a catalyst, and a surfactant.

Paragraph 36. The polyurethane foam-forming composition of one of paragraph 33 to paragraph 35, wherein the polyurethane foam-forming composition has an isocyanate index of 70 to 130, 80 to 120, or 90 to 115.

Paragraph 37. A polyurethane foam formed from the polyurethane foam-forming composition of one of paragraph 33 to paragraph 36.

Paragraph 38. A process for producing the PMPO of one of paragraph 1 to paragraph 32, comprising free-radically polymerizing the ethylenically unsaturated composition in a reaction mixture comprising: (a) the base polyol; (b) the PFS; and (c) the ethylenically unsaturated composition.

Paragraph 39. The process of paragraph 38, wherein during the polymerizing a stream of reactor contents is removed from a reactor via external piping and returned to the reactor.

Paragraph 40. The process of paragraph 39, wherein a ratio of reactor system residence time to recirculation loop residence time is 10 to 93 in which: (A) reactor system residence time = $(R_v + L_v) / R_{thru}$; and (B) recirculation loop residence time = $(R_v + L_v) / L_p$, in which: (1) $R_v$ is the volume, in cubic meters, of the continuous stirred tank reactor; (2) $L_v$ is the volume, in cubic meters, of the recirculation loop; (3) $R_{thru}$ is the reactor volumetric throughput in cubic meter per hour; and (4) $L_p$ is the volumetric flow rate of reactor contents through the recirculation loop in cubic meters per hour.

Paragraph 41. The process of one of paragraph 38 to paragraph 40, comprising: (1) providing a heterogenous mixture of the PFS (b), and, optionally, liquid diluent, in combination with the base polyol (a), the ethylenically unsaturated composition (c), and a free radical polymerization initiator (d), and (2) in a reaction zone maintained at a temperature sufficient to initiate a free radical reaction, and under sufficient pressure to maintain only liquid phases in the reaction zone, reacting at least a major portion of the ethylenically unsaturated monomer (c) to form a heterogenous mixture containing an enhanced PMPO, unreacted monomers and diluent, and (3) stripping the unreacted monomers and diluent from the enhanced PMPO to recover the unreacted monomers and diluent.

Paragraph 42. A polymer polyol (PMPO) comprising a dispersion of polymer particles in a base polyol, wherein the PMPO comprises a reaction product of a reaction mixture comprising: (a) the base polyol; (b) a pre-formed stabilizer (PFS); and (c) an ethylenically unsaturated composition comprising: (1) an ethylenically unsaturated compound of the formula (A):

$$Z\text{-}(A^5)_{n5}\text{-}OX^5 \qquad (A)$$

in which Z represents a hydrocarbyl residue selected from $C_4$-$C_{60}$ alkyl, aryl, and aralkyl, such as where Z represents a hydrocarbyl residue selected from $C_9$-$C_{30}$, alkyl, aryl and aralkyl (such as $C_4$-$C_{15}$ alkyl or $C_{12}$-$C_{15}$ alkyl, $A^5$ represents an oxyalkylene group, and n5 represents the average number of oxyalkylene groups and has a value of 2 to 500, 5 to 100, 10 to 30, or 10 to 25, or, where n5 has a value of 11 to 264, 62 to 173 or 97 to 12711 to 264, 62 to 173, or 97 to 127, and $X^5$ is a moiety that includes and an ethylenically unsaturated group; and (2) an ethylenically unsaturated compound that is different from ethylenically unsaturated compound (1).

Paragraph 43. The PMPO of paragraph 42, wherein the PMPO has a solids content of 30% by weight to 75% by weight, 35% by weight to 70% by weight, 40% by weight to 60% by weight, or 45% by weight to 55% by weight, or 48% by weight to 50% by weight, based on the total weight of the PMPO.

Paragraph 44. The PMPO of paragraph 42 or paragraph 43, wherein the PMPO has a viscosity of less than 50,000 mPa·s, less than 40,000 mPa·s, less than 30,000 mPa·s, less than 20,000 mPa·s, less than 15,000 mPa·s, or less than 10,000 mPa·s and at least 1,000 mP·s, at least 2,000 mPa·s, at least 3,000 mPa·s, or at least 4,000 mPa·s. such as where the PMPO has a viscosity of 1,000 to 8,000 mP·s, 2,000 to 7,000 mPa·s, 3,000 to 6,000 mPa·s, or 4,000 to 5,000 mPa·s.

Paragraph 45. The PMPO of one of paragraph 42 to paragraph 44, wherein the PMPO exhibits a monomodal particle size distribution.

Paragraph 46. The PMPO of one of paragraph 42 to paragraph 45, wherein the polymer particles of the PMPO have a volume-based mean particle size of no more than 1.5 μm, 0.1 to 1.5 μm, 0.1 to 1.2 μm, 0.1 to 1.05 μm, 0.5 to 1.0 μm, 0.60 to 0.90 μm, 0.70 to 0.90 μm, 0.80 to 0.90 μm, 0.60 to 0.80 μm, or 0.70 to 0.80 μm.

Paragraph 47. The PMPO of one of paragraph 42 to paragraph 46, wherein the PMPO exhibits good filterability.

Paragraph 48. The PMPO of one of paragraph 42 to paragraph 47, wherein the base polyol has a functionality of 2 to 8, 2 to 6, 3 to 6, 3 to 5, or 4 to 6, and an OH number of 20 to 400 mg KOH/g, 20 to 200 mg KOH/g, 20 to 150 mg KOH/g, 20 to 100 mg KOH/g, 20 to 75 mg KOH/g, 20 to 50 mg KOH/g, 25 to 50 mg KOH/g, or 30 to 50 mg KOH/g.

Paragraph 49. The PMPO of paragraph 48, wherein the base polyol has a number average molecular weight of 600 to 15,000 g/mol, 2,000 to 12,000 g/mol, or 3,000 to 8,000 g/mole.

Paragraph 50. The PMPO of one of paragraph 42 to paragraph 49, wherein the base polyol comprises a polyether polyol prepared by basic catalysis, or a low unsaturation polyether polyol prepared using double metal cyanide ("DMC") catalyst.

Paragraph 51. The PMPO of one of paragraph 42 to paragraph 50, wherein the PFS is a free radical polymerization product of: (1) a free radically polymerizable ethylenically unsaturated monomer; and (2) a macromer having the average formula:

$$A^1(OR^1OX^1)_{n1}$$

wherein A is an organic moiety, the free valence of which is ≥1, each $R^1$ is a divalent residue comprising an alkylene oxide moiety, n1 has a value of at least 1, such as 1 to 8, and each X1 is hydrogen or an organic moiety containing reactive unsaturation, copolymerizable with $A^1$, in which about one of such X is the organic moiety containing reactive unsaturation and any remaining $X^1$'s are hydrogen.

Paragraph 52. The PMPO of paragraph 51, wherein n1 has a value of greater than 3 to 8, such as 4 to 8, 5 to 8, 6 to 8, or 6.

Paragraph 53. The PMPO of paragraph 51 or paragraph 52, wherein the macromer (2) is a reaction product of a free radically polymerizable ethylenically unsaturated monomer and a hydroxy-terminated alkylene oxide adduct, in which the hydroxy-terminated alkylene oxide adduct is an adduct of one or more starter polyols of the formula:

$$A^2(OH)_{n2}$$

in which n2 has a value of greater than 3 to 8, such as where n2 has a value of 4 to 8, 5 to 8, 6 to 8, or 6, and $A^2$ is a polyvalent organic moiety, the free valence of which is n2, or an average value equal thereto.

Paragraph 54. The PMPO of paragraph 53, wherein the hydroxy-terminated alkoxylated polyol adduct has a number average molecular weight of at least 3000 g/mol, at least 4000 g/mol, or at least 5000 g/mol and up to 20,000 g/mol, up to 16,000 g/mol, up to 12,000 g/mol, or up to 10,000 g/mol.

Paragraph 55. The PMPO of paragraph 53 or paragraph 54, wherein the free radically polymerizable ethylenically unsaturated monomer used to produce the macromer (2) comprises a reactive group that is reactive with hydroxy groups present on the hydroxy-terminated alkylene oxide adduct, such as where the free radically polymerizable ethylenically unsaturated monomer used to produce the macromer (2) comprises maleic anhydride, fumaric acid, a dialkyl fumarate, a dialkyl maleate, a glycol maleate, a glycol fumarate, isocyanatoethyl methacrylate, methyl methacrylate, hydroxyethyl methacrylate, acrylic and/or methacrylic acid and their anhydride, methacroyl chloride, glycidyl methacrylate, vinylmethoxysilane, or a combination of any two or more thereof.

Paragraph 56. The PMPO of one of paragraph 53 to paragraph 55, wherein the free radically polymerizable ethylenically unsaturated monomer used to produce the macromer (2) comprises an aliphatically unsaturated aryl or arylaliphatic isocyanate, such as where the aliphatically unsaturated aryl or arylaliphatic isocyanate is represented by the formula:

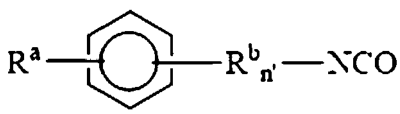

in which: (1) $R^a$ is an unsaturated substituted or unsubstituted aliphatic group, such as where $R^a$ is a substituted or unsubstituted allyl, methallyl, propenyl, isopropenyl, or vinyl group ; (2) $R^b$ is a substituted or unsubstituted $C_1$-$C_6$ alkylene group, such as where $R^b$ is a substituted or unsubstituted methylene group, such as where $R^b$ is a 2,2-propylene (dimethylmethylene) group; and (3) n' has a value of 0 or 1.

Paragraph 57. The PMPO of paragraph 56, wherein the aliphatically unsaturated aryl or arylaliphatic isocyanate comprises:

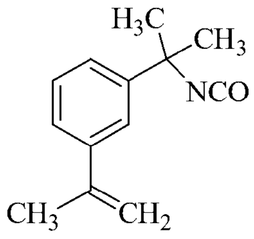

Paragraph 58. The PMPO of one of paragraph 51 to paragraph 57, wherein the PFS is a reaction product of a reaction mixture comprising: (i) a macromer; (ii) a free radically polymerizable ethylenically unsaturated monomer; (iii) a free radical polymerization initiator; (iv) optionally, a polymer control agent in which (i), (ii), and (iii) are soluble, but in which the resultant PFS is essentially insoluble; and (v) optionally, one or more polyols, such as where the PFS is prepared by reacting a combination of components (i), (ii), (iii), (iv), and optionally (v), in a reaction zone maintained at a temperature sufficient to initiate a free radical reaction, and under sufficient pressure to maintain only liquid phases in the reaction zone, for a sufficient period of time to react (i), (ii) and (iii); and recovering a mixture containing the preformed stabilizer dispersed in the polymer control agent (iv).
Paragraph 59. The PMPO of paragraph 58, wherein the free radically polymerizable ethylenically unsaturated monomer (ii) comprises a monovinylidene aromatic monomer, such as styrene, and a ethylenically unsaturated nitrile, such as acrylonitrile, such as where the free radically polymerizable ethylenically unsaturated monomer (ii) comprises a mixture of acrylonitrile and styrene, such as where the mixture has a weight ratio of acrylonitrile to styrene of 20:80 to 80:20, 25:75 to 75:25, 30:70 to 70:30, 60:40 to 40:60, or 55:45 to 45:55.
Paragraph 60. The PMPO of paragraph 58 or paragraph 59, wherein the PFS is a reaction product of a reaction mixture comprising: (i) a macromer, which is present in an amount of 10 to 40% by weight or 15 to 35% by weight; (ii) a free radically polymerizable ethylenically unsaturated monomer, such as acrylonitrile and at least one other ethylenically unsaturated comonomer copolymerizable therewith, which is present in an amount of 10 to 30% by weight or 15 to 25% by weight; (iii) a free radical polymerization initiator, which is present in an amount of 0.01 to 2% by weight, or 0.1 to 2% by weight; (iv) a polymer control agent in which (i), (ii), and (iii) are soluble, but in which the resultant PFS is essentially insoluble, which is present in an amount of 30 to 80% by weight or 40 to 70% by weight; and (v) optionally, one or more polyols, which is present in an amount of 0 to 40% by weight or 0 to 20% by weight or 0.05 to 10% by weight, the weight percents being based on total weight of the reaction mixture used to form the PFS.
Paragraph 61. The PMPO of one of paragraph 42 to paragraph 60, wherein X in formula (A) is a moiety that includes a urethane linkage and an ethylenically unsaturated group.
Paragraph 62. The PMPO of one of paragraph 42 to paragraph 61, wherein the ethylenically unsaturated compound of formula (A) is a reaction product of (i) an ethylenically unsaturated compound comprising a hydroxyl-reactive group, and (ii) a polyether monol of the structure:

$$Z\text{-}(A^5)_{n5}\text{-}OH$$

in which Z represents a hydrocarbyl residue selected from $C_4$-$C_{60}$ alkyl, aryl, and aralkyl, such as where Z represents a hydrocarbyl residue selected from $C_9$-$C_{30}$, alkyl, aryl and aralkyl (such as $C_4$-$C_{15}$ alkyl or $C_{12}$-$C_{15}$ alkyl, $A^5$ represents an oxyalkylene group, and n5 represents the average number of oxyalkylene groups and has a value such that the polyether monol has a Mn of 1,000 to 12,000 g/mole such as where n5 has a value of 2 to 500, 5 to 100, 10 to 30, or 10 to 25, or, where n5 has a value of 11 to 264, 62 to 173 or 97 to 127.
Paragraph 63. The PMPO of paragraph 62, wherein the ethylenically unsaturated compound comprising a hydroxyl-reactive group used to produce the ethylenically unsaturated compound of formula (A) comprises an aliphatically unsaturated aryl or arylaliphatic isocyanate, such as where the aliphatically unsaturated aryl or arylaliphatic isocyanate is represented by the formula:

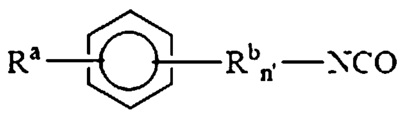

in which: (1) $R^a$ is an unsaturated substituted or unsubstituted aliphatic group, such as where $R^a$ is a substituted or unsubstituted allyl, methallyl, propenyl, isopropenyl, or vinyl group; (2) $R^b$ is a substituted or unsubstituted $C_1$-$C_6$ alkylene group, such as where $R^b$ is a substituted or unsubstituted methylene group, such as where $R^b$ is a 2,2-propylene (dimethylmethylene) group; and (3) n' has a value of 0 or 1.
Paragraph 64. The PMPO of paragraph 63, wherein the aliphatically unsaturated aryl or arylaliphatic isocyanate

comprises:

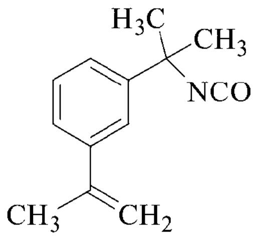

.

Paragraph 65. The PMPO of one of paragraph 62 to paragraph 64, wherein the polyether monol is an adduct of a monol reacted with a 1,2-alkylene oxide, such as ethylene oxide, 1,2-propylene oxide, 1,2-butylene oxide or a mixture of any two or more thereof.

Paragraph 66. The PMPO of paragraph 65, wherein the monol comprises a compound represented by the structure:

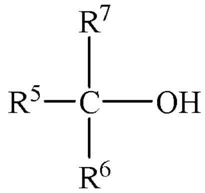

in which $R^5$, $R^6$, and $R^7$ each independently represent H, a $C_1$-$C_{56}$ alkyl group, a $C_6$-$C_{56}$ aryl group, a $C_3$-$C_{56}$ cycloalkyl group, or a $C_7$-$C_{56}$ aralkyl group, or the groups $R^5$, $R^6$, and/or $R^7$ may be linked via a ring system, in which any one or more of $R^5$, $R^6$ and $R^7$ may also represent any of the aforementioned groups that further contain functional groups that do not react with an isocyanate group, such as where the monol comprises a primary alcohol, a secondary alcohol, a tertiary alcohol, or a combination of any two or more thereof, an aromatic monol, an aliphatic monol, a cycloaliphatic monol, or a combination of any two or more thereof, each of which may be saturated or unsaturated, cyclic, linear or branched, such as where the monol contains 1 to 56, 1 to 36, 1 to 26, 10 to 15, or 12 to 15 carbon atoms, such as where the monol comprises a blend of $C_{12}$, $C_{13}$, $C_{14}$ and $C_{15}$ primary alcohols.

Paragraph 67. The PMPO of one of paragraph 62 to paragraph 66, wherein the polyether monol has a or where the polyether monol has an OH number of or where the polyether monol has an OH number of at most 28 mg KOH/g, at most 18.5 mg KOH/g, at most 14 mg KOH/g or at most 11.2 mg KOH/g, and at least 4.7 mg KOH/g, at least 5.6 mg KOH/g, at least 7.0 mg KOH/g, or at least 8.0 mg KOH/g.

Paragraph 68. The PMPO of one of paragraph 62 to paragraph 67, wherein the polyether monol and the aliphatically unsaturated aryl or arylaliphatic isocyanate are present in relative amounts to result in 0.5 to 1.5, 0.8 to 1.2, or 0.9. to 1.1 hydroxyl groups present per isocyanate group.

Paragraph 69. The PMPO of one of paragraph 42 to paragraph 68, wherein the ethylenically unsaturated compound (1) is present in an amount of 0.1 to 10%, such as 0.1 to 5% by weight or 0.1 to 3% by weight, based on total weight of the ethylenically unsaturated composition (c).

Paragraph 70. The PMPO of one of paragraph 42 to paragraph 69, wherein the ethylenically unsaturated compound (1) is present in an amount of 10 to 75 %, such as 20 to 65% by weight, based on total combined weight of ethylenically unsaturated compound (1) and macromer used to prepare the PFS.

Paragraph 71. The PMPO of one of paragraph 42 to paragraph 70, wherein ethylenically unsaturated compound (2) that is different from ethylenically unsaturated compound (1) comprises styrene and acrylonitrile, such as where styrene and acrylonitrile are used in sufficient amounts such that the weight ratio of styrene to acrylonitrile (S:AN) is within the range of 80:20 to 20:80, such as 75:25 to 25:75, such as where styrene is present in an amount of more than 70% by weight, at least 75% by weight, at least 80% by weight, or at least 85% by weight and acrylonitrile is present in an amount of less than 30% by weight, no more than 25% by weight, no more than 20% by weight, or no more than 15% by weight, the weight percents being based on total combined weight of styrene and acrylonitrile.

Paragraph 72. The PMPO of one of paragraph 42 to paragraph 71, wherein the reaction mixture used to produce the PMPO also includes a free-radical polymerization initiator (d).

Paragraph 73. The PMPO of one of paragraph 42 to paragraph 72, wherein the reaction mixture used to prepare the PMPO further comprises a chain transfer agent (f).

Paragraph 74. A polyurethane foam-forming composition comprising: (1) a polyisocyanate component and (2) an isocyanate-reactive component comprising a PMPO of one of paragraph 42 to paragraph 73.

Paragraph 75. The polyurethane foam-forming composition of paragraph 74, wherein the isocyanate-reactive

component further comprises a polyol, different from the PMPO of one of paragraph 42 to paragraph 73, such as a polyether polyol having a functionality of from 2 to 6, an OH number of from 18 to 238, and a number average molecular weight of from 160 to 8000.

Paragraph 76. The polyurethane foam-forming composition of paragraph 74 or paragraph 75, further comprising a blowing agent, a catalyst, and a surfactant.

Paragraph 77. The polyurethane foam-forming composition of one of paragraph 74 to paragraph 76, wherein the polyurethane foam-forming composition has an isocyanate index of 70 to 130, 80 to 120, or 90 to 115.

Paragraph 78. A polyurethane foam formed from the polyurethane foam-forming composition of one of paragraph 74 to paragraph 77.

Paragraph 79. A process for producing the PMPO of one of paragraph 42 to paragraph 73, comprising free-radically polymerizing the ethylenically unsaturated composition in a reaction mixture comprising: (a) the base polyol; (b) the PFS; and (c) the ethylenically unsaturated composition.

Paragraph 80. The process of paragraph 79, wherein during the polymerizing a stream of reactor contents is removed from a reactor via external piping and returned to the reactor.

Paragraph 81. The process of paragraph 80, wherein a ratio of reactor system residence time to recirculation loop residence time is 10 to 93 in which: (A) reactor system residence time = $(R_v + L_v) / R_{thru}$; and (B) recirculation loop residence time = $(R_v + L_v) / L_p$, in which: (1) $R_v$ is the volume, in cubic meters, of the continuous stirred tank reactor; (2) $L_v$ is the volume, in cubic meters, of the recirculation loop; (3) $R_{thru}$ is the reactor volumetric throughput in cubic meter per hour; and (4) $L_p$ is the volumetric flow rate of reactor contents through the recirculation loop in cubic meters per hour.

Paragraph 82. The process of one of paragraph 79 to paragraph 81, comprising: (1) providing a heterogenous mixture of the PFS (b), and, optionally, liquid diluent, in combination with the base polyol (a), the ethylenically unsaturated composition (c), and a free radical polymerization initiator (d), and (2) in a reaction zone maintained at a temperature sufficient to initiate a free radical reaction, and under sufficient pressure to maintain only liquid phases in the reaction zone, reacting at least a major portion of the ethylenically unsaturated monomer (c) to form a heterogenous mixture containing an enhanced PMPO, unreacted monomers and diluent, and (3) stripping the unreacted monomers and diluent from the enhanced PMPO to recover the unreacted monomers and diluent.

The non-limiting and non-exhaustive examples that follow are intended to further describe various non-limiting and non-exhaustive implementations without restricting the scope of the implementations described in this specification.

## EXAMPLES

The following components were used in the working examples of this specification:

Polyol A: A sorbitol-started polyether polyol having a hydroxyl number of 33 mg KOH/g, and a viscosity of about 1,350 mPa·s at 25 °C, which was produced by reacting propylene oxide and ethylene oxide in the presence of potassium hydroxide catalyst and refining to remove the catalyst;

Polyether Monol Intermediate A: 3241 g of a monol comprised of a mixture of C12 - C15 linear primary alcohols and 0.625 g of DMC catalyst were charged to a 5 gal jacketed, stirred tank reactor. The reactor was closed, the agitator started at 305 rpm and the vapor space was pressure purged with nitrogen to eliminate oxygen and create a nitrogen atmosphere. The reactor was heated to 130°C and then a nitrogen sparge of 350 cc/min at ≤ 50 mmHg was performed for 30 minutes to remove water from the catalyst. The nitrogen sparge was stopped and the reactor pressure was set to 50 mm Hg. 2-6 wt.% of the initial monol charge is added to the reactor to activate the DMC catalyst, which is considered active once the reactor pressure spike begins to drop. The remainder of the total 21759 g of propylene oxide was then metered into the reactor over a period of 4 hours. After a 30 minute post reaction at 130°C, the reaction mixture was stripped under vacuum for another 30 minutes to remove any residual unreacted oxide. The approximately 35 mg KOH/g hydroxyl number reaction mixture was cooled to room temperature, drained from the reactor, and stored for the next step;

Polyether Monol B: 5343 g of Polyether Monol Intermediate A and 0.4 g of DMC catalyst were charged to another 5 gal jacketed, stirred tank reactor with a gate agitator (low wall clearance style agitator). The reactor was closed, the agitator started at 305 rpm and the vapor space was pressure purged with nitrogen to eliminate oxygen and create a nitrogen atmosphere. The reactor was heated to 130°C and then a nitrogen sparge of 350 cc/min at ≤ 50 mmHg was performed for 30 minutes to remove water from the catalyst. The nitrogen sparge was stopped and the reactor pressure was set to 50 mm Hg. 2-6 wt.% of the initial monol charge is added to the reactor to activate the DMC catalyst, which is considered active once the reactor pressure spike begins to drop. The remainder of the total 14657 g of propylene oxide was then metered into the reactor over a period of 4 hours. After a 30 minute post reaction at 130°C, the reaction mixture was stripped under vacuum for another 30 minutes to remove any residual unreacted oxide. The

8.9 mg KOH/g hydroxyl number reaction mixture was cooled to room temperature, drained from the reactor, and stored for the next step;

Polyether Monol C: 4000 g of Polyether Monol Intermediate A and 0.4 g of DMC catalyst were charged to another 5 gal jacketed, stirred tank reactor with a gate agitator (low wall clearance style agitator). The reactor was closed, the agitator started at 305 rpm and the vapor space was pressure purged with nitrogen to eliminate oxygen and create a nitrogen atmosphere. The reactor was heated to 130°C and then a nitrogen sparge of 350 cc/min at ≤ 50 mmHg was performed for 30 minutes to remove water from the catalyst. The nitrogen sparge was stopped and the reactor pressure was set to 50 mm Hg. 2-6 wt.% propylene oxide based on the initial monol charge is added to the reactor to activate the DMC catalyst, which is considered active once the initial reactor pressure spike begins to drop. The remainder of the total 16000 g of propylene oxide was then metered into the reactor over a period of 4 hours. After a 30 minute post reaction at 130°C, the reaction mixture was stripped under vacuum for another 30 minutes to remove any residual unreacted oxide. The 7.0 mg KOH/g hydroxyl number reaction mixture was cooled to room temperature, drained from the reactor, and stored for the next step;

Polyether Monol D: 2671 g of Polyether Monol Intermediate A and 0.4 g of DMC catalyst were charged to another 5 gal jacketed, stirred tank reactor with a gate agitator (low wall clearance style agitator). The reactor was closed, the agitator started at 305 rpm and the vapor space was pressure purged with nitrogen to eliminate oxygen and create a nitrogen atmosphere. The reactor was heated to 130°C and then a nitrogen sparge of 350 cc/min at ≤ 50 mmHg was performed for 30 minutes to remove water from the catalyst. The nitrogen sparge was stopped and the reactor pressure was set to 50 mm Hg. 2-6 wt.% propylene oxide based on the initial monol charge is added to the reactor to activate the DMC catalyst, which is considered active once the initial reactor pressure spike begins to drop. The remainder of the total 17327 g of propylene oxide was then metered into the reactor over a period of 11 hours. After a 30 minute post reaction at 130°C, the reaction mixture was stripped under vacuum for another 30 minutes to remove any residual unreacted oxide. The 4.675 mg KOH/g hydroxyl number reaction mixture was cooled to room temperature, drained from the reactor, and stored for the next step;

Polyether Monol E: 2074 g of a monol comprised of a mixture of C12 - C15 linear primary alcohols and 0.5 g of DMC catalyst were charged to a 5 gal jacketed, stirred tank reactor. The reactor was closed, the agitator started at 305 rpm and the vapor space was pressure purged with nitrogen to eliminate oxygen and create a nitrogen atmosphere. The reactor was heated to 130°C and then a nitrogen sparge of 350 cc/min at ≤ 50 mmHg was performed for 30 minutes to remove water from the catalyst. The nitrogen sparge was stopped and the reactor pressure was set to 50 mm Hg. 2-6 wt.% propylene oxide based on the initial monol charge is added to the reactor to activate the DMC catalyst, which is considered active once the initial reactor pressure spike begins to drop. The remainder of the total 17925 g of propylene oxide was then metered into the reactor over a period of 4 hours. After a 30 minute post reaction at 130°C, the reaction mixture was stripped under vacuum for another 30 minutes to remove any residual unreacted oxide. The approximately 14 mg KOH/g hydroxyl number reaction mixture was cooled to room temperature, drained from the reactor, and stored for the next step;

Base Polyol A: A glycerine-started polyether polyol produced by reacting propylene oxide and ethylene oxide in the presence of potassium hydroxide catalyst and refining to remove the catalyst. The polyol contains about 12.5% ethylene oxide as an internal block, a hydroxyl number of 52, and a viscosity of about 460 cps;

Base Polyol B: A glycerine-started polyether polyol having a hydroxyl number of 36 mg KOH/g and a viscosity of about 810 mPa·s at 25 °C, which was produced by reacting propylene oxide and ethylene oxide in the presence of potassium hydroxide catalyst and refining to remove the catalyst;

PCA: Isopropanol, a polymer control agent;

MDI: A methylene diphenyl diisocyanate based on material having an NCO group content of about 33.6%, a functionality of 2, and containing about 57% by wt. of the 2,4-isomer, which is available as Mondur® MLQ from Covestro LLC;

TMI: Isopropenyl dimethyl benzyl isocyanate (an unsaturated aliphatic isocyanate) sold as TMI® by Allnex;

Initiator A: Tertiary-butylperoxy-2-ethylhexanoate, a free radical polymerization initiator, available as TBPEH from United Initiators;

Initiator B: Tertiary-amyl peroxypivalate, a free radical polymerization initiator, commercially available as Trigonox 125-C75 from Nouryon;

Initiator C: 1,1-Di(tert-amylperoxy)cyclohexane, a free radical polymerization initiator, available as Trigonox 122-C80 from Nouryon; and

Catalyst A: Bismuth neodecanoate, commercially available under the name Coscat 83 from Vertellus.

The following testing methods were utilized in the working examples of this specification:

Viscosity: Viscosities are reported in mPa·s as measured on an Anton-Paar SVM 3000 viscometer at 25 °C that has been demonstrated to give equivalent results as can be generated with ASTM-D4878-15. The instrument was

calibrated using mineral oil reference standards of known viscosity.

Filtration: Filterability was determined by diluting one part by weight sample (e.g. 200 grams) of polymer polyol with two parts by weight of anhydrous isopropanol (e.g. 400 grams) to remove any viscosity-imposed limitations and using a fixed quantity of material relative to a fixed cross-sectional area of screen (e.g. 1 1/8 in. diameter), such that as of the polymer polyol and isopropanol solution pass by gravity through a 700-mesh screen. The 700-mesh screen was made with a Dutch twill weave. The actual screen used had a nominal opening of 30 microns. The time required for essentially 100% of the sample to pass through the screen was reported in seconds with samples requiring greater than 300 seconds being reported as "300+".

General Procedure for producing Macromers:

Macromer A: Prepared by heating Polyol A (100 parts), TMI (2 parts), and 200 ppm Catalyst A at 75 °C for 4 hours.

Macromer B: Prepared by heating Polyol A (100 parts), TMI (0.6 parts), MDI (0.2 parts) and 200 ppm Catalyst A at 75 °C for 4 hours.

Macromer C: Prepared by heating Polyether Monol B (100 parts), TMI (3.2 parts), and 200 ppm Catalyst A at 75 °C for 4 hours.

Macromer D: Prepared by heating Polyether Monol C (100 parts), TMI (2.6 parts), and 200 ppm Catalyst A at 75 °C for 4 hours.

Macromer E: Prepared by heating Polyether Monol D (100 parts), TMI (1.6 parts), and 200 ppm Catalyst A at 75 °C for 4 hours.

Macromer F: Prepared by heating Polyether Monol E (100 parts), TMI (5.1 parts), and 200 ppm Catalyst A at 75 °C for 4 hours.

General Procedure for preparing Preformed Stabilizers (PFS):

The PFS' were prepared in a two-stage reaction system comprising a continuously-stirred tank reactor (CSTR) fitted with an impeller and 4 baffles (first-stage) and a plug-flow reactor (second-stage). The residence time in each reactor was about 50 minutes. The reactants were pumped continuously to the reactor from feed tanks through an in-line static mixer and then through a feed tube into the reactor, which was well mixed. The temperature of the reaction mixture was controlled at 120 ± 5 °C. The product from the second-stage reactor overflowed continuously through a pressure regulator designed to control the pressure in each stage at 65 psig. The product, i.e. the PFS, then passed through a cooler and into a collection vessel. The PFS formulations are disclosed in Table 1.

Table 1

| Component | PFS A | PFS B |
|---|---|---|
| PCA (% wt.) | 60.1 | 60.0 |
| Macromer | A | B |
| Macromer (% wt.) | 24.0 | 24.0 |
| S:AN Weight Ratio | 50:50 | 50:50 |
| Monomer (% wt.) | 15.9 | 15.9 |
| Initiator A (% wt.) | 0.05 | 0.03 |

General Procedure for producing Polymer Polyols

This series of examples relates to the preparation of polymer polyols. The polymer polyols were prepared in a two-stage reaction system comprising a continuously-stirred tank reactor (CSTR) fitted with an impellor and 4 baffles (first-stage) and a plug-flow reactor (second-stage). The residence time in each reactor was about 60 minutes. The reactants were pumped continuously from feed tanks through an in-line static mixer and then through a feed tube into the reactor, which was well mixed. The temperature of the reaction was controlled at 120 ± 5 °C. The product from the second-stage reactor overflowed continuously through a pressure regulator designed to control the pressure in each stage at 45 psig. The polymer polyol then passed through a cooler and into a collection vessel. The crude product was vacuum stripped to remove volatiles. The weight percent total polymer in the product was calculated from the concentrations of monomers

measured in the crude polymer polyol before stripping.

Table 2 shows the composition of Examples 1-11. These examples demonstrate the incorporation of macromers based on high molecular weight polyether monols in cooperation with the use of PFS A. Examples 2-11 show that the mean particle size could be reduced and tuned depending on the amount of supplemental macromer used in addition to the molecular weight of the supplemental macromer. Furthermore, most examples utilizing the high molecular weight macromers demonstrated comparable or better filterability (vs comparative Example 1).

Table 2

| | Ex. 1 | Ex. 2 | Ex. 3 | Ex. 4 | Ex. 5 | Ex. 6 |
|---|---|---|---|---|---|---|
| Base Polyol | A | A | A | A | A | A |
| Total Base Polyol (% wt.) | 46.2 | 45.6 | 45.1 | 43.1 | 45.6 | 45.1 |
| Solids (by calc. % wt.) | 48.7 | 48.8 | 48.7 | 48.6 | 48.9 | 48.9 |
| S:AN weight ratio | 65:35 | 65:35 | 65:35 | 65:35 | 65:35 | 65:35 |
| PFS | A | A | A | A | A | A |
| PFS (% wt.) | 6.9 | 6.9 | 6.9 | 6.9 | 6.9 | 6.9 |
| PFS Macromer | A | A | A | A | A | A |
| Macromer from PFS (% wt.) | 1.7 | 1.7 | 1.7 | 1.7 | 1.7 | 1.7 |
| Total Isopropanol (% wt.) | 4.5 | 4.5 | 4.5 | 4.5 | 4.5 | 4.5 |
| Initiator B/C (% wt.) | 0.25/0.015 | 0.25/0.015 | 0.25/0.015 | 0.25/0.015 | 0.25/0.015 | 0.25/0.015 |
| Additional Macromer | - | C | C | C | D | D |
| Additional Macromer (% wt.) | 0.0 | 0.5 | 1.0 | 3.0 | 0.5 | 1.0 |
| Additional Macromer (%)* | 0.0 | 22.7 | 37.0 | 63.8 | 22.7 | 37.0 |
| Total Macromer (% wt.) | 1.7 | 2.2 | 2.7 | 4.7 | 2.2 | 2.7 |
| Viscosity (mPa·s @ 25°C) | 4980 | 5249 | 5387 | 7537 | 5302 | 6321 |
| 700-Mesh filtration (sec) | 194 | 169 | 175 | 173 | 173 | 186 |
| Mean Particle Size (μm) | 0.91 | 0.84 | 0.78 | 0.67 | 0.85 | 0.79 |
| Monomodal? | Yes | Yes | Yes | Yes | Yes | Yes |
| * Percent of additional macromer as a function of total percent weight macromer | | | | | | |

Table 2 cont.

| | Ex. 7 | Ex. 8 | Ex. 9 | Ex. 10 | Ex. 11 |
|---|---|---|---|---|---|
| Base Polyol | A | A | A | A | A |
| Total Base Polyol (% wt.) | 43.1 | 45.6 | 45.1 | 43.1 | 41.1 |
| Solids (by calc. % wt.) | 48.8 | 48.7 | 48.9 | 48.9 | 46.8 |
| S:AN weight ratio | 65:35 | 65:35 | 65:35 | 65:35 | 65:35 |
| PFS | A | A | A | A | A |
| PFS (% wt.) | 6.9 | 6.9 | 6.9 | 6.9 | 6.9 |
| PFS Macromer | A | A | A | A | A |
| Macromer from PFS (% wt.) | 1.7 | 1.7 | 1.7 | 1.7 | 1.7 |
| Total Isopropanol (% wt.) | 4.5 | 4.5 | 4.5 | 4.5 | 4.5 |
| Initiator B/C (% wt.) | 0.25/0.015 | 0.25/0.015 | 0.25/0.015 | 0.25/0.015 | 0.25/0.015 |
| Additional Macromer | D | E | E | E | E |
| Additional Macromer (% wt.) | 3.0 | 0.5 | 1.0 | 3.0 | 5.0 |

(continued)

| | Ex. 7 | Ex. 8 | Ex. 9 | Ex. 10 | Ex. 11 |
|---|---|---|---|---|---|
| Additional Macromer (%)* | 63.8 | 22.7 | 37.0 | 63.8 | 74.6 |
| Total Macromer (% wt.) | 4.7 | 2.2 | 2.7 | 4.7 | 6.7 |
| **Viscosity** (mPa·s @ 25°C) | 10270 | 5786 | 6868 | 21420 | >25000 |
| 700-Mesh filtration (sec) | 180 | 218 | 209 | 298 | 300+ |
| Mean Particle Size (μm) | 0.68 | 0.84 | 0.81 | 0.73 | 0.67 |
| Monomodal? | Yes | Yes | Yes | Yes | Yes |
| * Percent of additional macromer as a function of total percent weight macromer | | | | | |

Table 3 shows the composition of Examples 12-15. Incorporation of supplemental, high molecular weight macromer (Macromer C or E) in cooperation with PFS B exhibited a similar behavior with a reduction in mean particle size correlating to the amount of supplemental macromer and the molecular weight of the macromer. Good filterability was again observed with all examples.

Table 3

| | Ex. 12 | Ex. 13 | Ex. 14 | Ex. 15 |
|---|---|---|---|---|
| Base Polyol | B | B | B | B |
| Total Base Polyol (% wt.) | 49.4 | 48.9 | 48.4 | 48.4 |
| Solids (by calc. % wt.) | 44.8 | 44.7 | 44.7 | 44.4 |
| S:AN weight ratio | 63.5:36.5 | 63.5:36.5 | 63.5:36.5 | 63.5:36.5 |
| PFS | B | B | B | B |
| PFS (% wt.) | 8.3 | 8.3 | 8.3 | 8.3 |
| PFS Macromer | B | B | B | B |
| Macromer from PFS (% wt.) | 2.0 | 2.0 | 2.0 | 2.0 |
| Total Isopropanol (% wt.) | 5.0 | 5.0 | 5.0 | 5.0 |
| Initiator B/C (% wt.) | 0.25/0.015 | 0.25/0.015 | 0.25/0.015 | 0.25/0.015 |
| Additional Macromer | - | C | C | E |
| Additional Macromer (% wt.) | 0.0 | 0.5 | 1.0 | 1.0 |
| Additional Macromer (%)* | 0.0 | 20.0 | 33.3 | 33.3 |
| Total Macromer (% wt.) | 2.0 | 2.5 | 3.0 | 3.0 |
| Viscosity (mPa·s @ 25°C) | 6505 | 6488 | 7685 | 15770 |
| 700-Mesh filtration (sec) | 196 | 207 | 184 | 232 |
| Mean Particle Size (μm) | 1.05 | 0.95 | 0.92 | 0.88 |
| Monomodal? | Yes | Yes | Yes | Yes |
| * Percent of additional macromer as a function of total percent weight macromer | | | | |

Table 4 shows the composition of Examples 16-21. These examples demonstrate the use of Macromer C when using reduced levels of acrylonitrile. Examples 18-19 show that Macromer C was highly effective at controlling particle size, even at low levels, while also providing good filterability. When 20% wt. acrylonitrile was used (Examples 20-21) acceptable particle size was also observed.

Table 4

| | Ex. 16 | Ex. 17 | Ex. 18 | Ex. 19 | Ex. 20 | Ex. 21 |
|---|---|---|---|---|---|---|
| Base Polyol | A | A | A | A | A | A |
| Total Base Polyol (% wt.) | 46.2 | 46.2 | 45.9 | 45.4 | 45.3 | 43.3 |
| Solids (by calc. % wt.) | 48.5 | 48.0 | 48.5 | 48.4 | 48.1 | 48.0 |
| S:AN weight ratio | 75:25 | 80:20 | 75:25 | 75:25 | 80:20 | 80:20 |
| PFS | A | A | A | A | A | A |
| PFS (% wt.) | 6.9 | 6.9 | 6.9 | 6.9 | 6.9 | 6.9 |
| PFS Macromer | A | A | A | A | A | A |
| Macromer from PFS (% wt.) | 1.7 | 1.7 | 1.7 | 1.7 | 1.7 | 1.7 |
| Total Isopropanol (% wt.) | 4.5 | 4.5 | 4.5 | 4.5 | 4.5 | 4.5 |
| Initiator B/C (% wt.) | 0.25/0.015 | 0.25/0.015 | 0.25/0.015 | 0.25/0.015 | 0.25/0.015 | 0.25/0.015 |
| Additional Macromer | - | - | C | C | C | C |
| Additional Macromer (% wt.) | 0.0 | 0.0. | 0.50 | 1.0 | 1.0 | 3.0 |
| Additional Macromer (%)* | 0.0 | 0.0 | 22.7 | 37.0 | 37.0 | 63.8 |
| Total Macromer (% wt.) | 1.7 | 1.7 | 2.2 | 2.7 | 2.7 | 4.7 |
| Viscosity (mPa·s @ 25°C) | 5030 | 6319 | 5169 | 5584 | 6314 | 9446 |
| 700-Mesh filtration (sec) | 300+ | 300+ | 175 | 185 | 300+ | 300+ |
| Mean Particle Size (μm) | 1.21 | 1.55 | 1.01 | 0.93 | 1.11 | 0.92 |
| Monomodal? | Yes | Yes | Yes | Yes | Yes | Yes |
| * Percent of additional macromer as a function of total percent weight macromer | | | | | | |

Table 5 shows the composition of Example 22-27. These examples demonstrate that a macromer of lower nominal molecular weight (Macromer F) may also generally be used to afford a polymer polyol with good filterability and comparable or lower particle size. When the acrylonitrile content was reduced Macromer F still yielded products with reasonable viscosity and comparable or reduced particle sizes.

Table 5

| | Ex. 22 | Ex. 23 | Ex. 24 | Ex. 25 | Ex. 26 | Ex. 27 |
|---|---|---|---|---|---|---|
| Base Polyol | A | A | A | A | A | A |
| Total Base Polyol (% wt.) | 45.6 | 45.1 | 43.1 | 45.8 | 45.1 | 43.2 |
| Solids (by calc. % wt.) | 48.6 | 48.5 | 48.6 | 48.4 | 48.4 | 48.4 |
| S:AN weight ratio | 65:35 | 65:35 | 65:35 | 75:25 | 75:25 | 75:25 |
| PFS | A | A | A | A | A | A |
| PFS (% wt.) | 6.9 | 6.9 | 6.9 | 6.9 | 6.9 | 6.9 |
| PFS Macromer | A | A | A | A | A | A |
| Macromer from PFS (% wt.) | 1.7 | 1.7 | 1.7 | 1.7 | 1.7 | 1.7 |
| Total Isopropanol (% wt.) | 4.5 | 4.5 | 4.5 | 4.5 | 4.5 | 4.5 |
| Initiator B/C (% wt.) | 0.25/0.015 | 0.25/0.015 | 0.25/0.015 | 0.25/0.015 | 0.25/0.015 | 0.25/0.015 |
| Additional Macromer | F | F | F | F | F | F |
| Additional Macromer (% wt.) | 0.5 | 1.0 | 3.0 | 0.5 | 1.0 | 3.0 |
| Additional Macromer (%)* | 22.7 | 37.0 | 63.8 | 22.7 | 37.0 | 63.8 |
| Total Macromer (% wt.) | 2.2 | 2.7 | 4.7 | 2.2 | 2.7 | 4.7 |

(continued)

| | Ex. 22 | Ex. 23 | Ex. 24 | Ex. 25 | Ex. 26 | Ex. 27 |
|---|---|---|---|---|---|---|
| Viscosity (mPa·s @ 25°C) | 5169 | 5679 | 14540 | 5088 | 5470 | 9067 |
| 700-Mesh filtration (sec) | 197 | 184 | 300+ | 300+ | 300+ | 299 |
| Mean Particle Size (μm) | 0.88 | 0.80 | 0.75 | 0.99 | 0.90 | 0.80 |
| Monomodal? | Yes | Yes | Yes | Yes | Yes | Yes |
| * Percent of additional macromer as a function of total percent weight macromer | | | | | | |

Table 6 shows the composition of Examples 28-31. These examples show that Macromer D could be utilized when reduced levels of acrylonitrile were used to obtain products with acceptable viscosity and comparable or reduced particle sizes.

Table 6

| | Ex. 28 | Ex. 29 | Ex. 30 | Ex. 31 |
|---|---|---|---|---|
| Base Polyol | A | A | A | A |
| Total Base Polyol (% wt.) | 45.8 | 45.3 | 45.3 | 43.3 |
| Solids (by calc. % wt.) | 48.1 | 48.1 | 47.6 | 47.5 |
| S:AN weight ratio | 75:25 | 75:25 | 80:20 | 80:20 |
| PFS | A | A | A | A |
| PFS (% wt.) | 6.9 | 6.9 | 6.9 | 6.9 |
| PFS Macromer | A | A | A | A |
| Macromer from PFS (% wt.) | 1.7 | 1.7 | 1.7 | 1.7 |
| Total Isopropanol (% wt.) | 4.5 | 4.5 | 4.5 | 4.5 |
| Initiator B/C (% wt.) | 0.25/0.015 | 0.25/0.015 | 0.25/0.015 | 0.25/0.015 |
| Additional Macromer | D | D | D | D |
| Additional Macromer (% wt.) | 0.5 | 1.0 | 1.0 | 3.0 |
| Additional Macromer (%)* | 22.7 | 37.0 | 37.0 | 63.8 |
| Total Macromer (% wt.) | 2.2 | 2.7 | 2.7 | 4.7 |
| Viscosity (mPa·s @ 25°C) | 5486 | 5915 | 6215 | 9448 |
| 700-Mesh filtration (sec) | 300+ | 300+ | 300+ | 300+ |
| Mean Particle Size (μm) | 1.02 | 0.92 | 1.08 | 0.90 |
| Monomodal? | Yes | Yes | Yes | Yes |
| * Percent of additional macromer as a function of total percent weight macromer | | | | |

Table 7 shows the composition of Examples 32-35. These examples demonstrate use of Macromers F or D as supplemental macromer when Base Polyol B and PFS B were used. In all examples good filterability and viscosity were observed in addition to comparable or reduced particle size.

Table 7

| | Ex. 32 | Ex. 33 | Ex. 34 | Ex. 35 |
|---|---|---|---|---|
| Base Polyol | B | B | B | B |
| Total Base Polyol (% wt.) | 48.9 | 48.4 | 48.9 | 48.4 |
| Solids (by calc. % wt.) | 44.4 | 44.5 | 44.7 | 44.7 |
| S:AN weight ratio | 63.5:36.5 | 63.5:36.5 | 63.5:36.5 | 63.5:36.5 |

(continued)

| | Ex. 32 | Ex. 33 | Ex. 34 | Ex. 35 |
|---|---|---|---|---|
| PFS | B | B | B | B |
| PFS (% wt.) | 8.3 | 8.3 | 8.3 | 8.3 |
| PFS Macromer | B | B | B | B |
| Macromer from PFS (% wt.) | 2.0 | 2.0 | 2.0 | 2.0 |
| Total Isopropanol (% wt.) | 5.0 | 5.0 | 5.0 | 5.0 |
| Initiator B/C (% wt.) | 0.25/0.015 | 0.25/0.015 | 0.25/0.015 | 0.25/0.015 |
| Additional Macromer | F | F | D | D |
| Additional Macromer (% wt.) | 0.5 | 1.0 | 0.5 | 1.0 |
| Additional Macromer (%)* | 20.0 | 33.3 | 20.0 | 33.3 |
| Total Macromer (% wt.) | 2.5 | 3.0 | 2.5 | 3.0 |
| Viscosity (mPa·s @ 25°C) | 6331 | 7758 | 6650 | 8043 |
| 700-Mesh filtration (sec) | 224 | 170 | 207 | 184 |
| Mean Particle Size (μm) | 0.96 | 1.01 | 0.93 | 0.91 |
| Monomodal? | Yes | Yes | Yes | Yes |
| * Percent of additional macromer as a function of total percent weight macromer | | | | |

Although the invention has been described in detail in the foregoing for the purpose of illustration, it is to be understood that such detail is solely for that purpose and that variations can be made therein by those skilled in the art without departing from the spirit and scope of the invention except as it may be limited by the claims.

## Claims

**1.** A polymer polyol (PMPO) comprising a dispersion of polymer particles in a base polyol, wherein the PMPO comprises a reaction product of a reaction mixture comprising:

(a) the base polyol;
(b) a pre-formed stabilizer (PFS); and
(c) an ethylenically unsaturated composition comprising:

(1) an ethylenically unsaturated compound of the formula (A):

$$Z\text{-}(A^5)_{n5}\text{-}OX^5 \qquad (A)$$

in which Z represents a hydrocarbyl residue selected from $C_4$-$C_{60}$ alkyl, aryl, and aralkyl, $A^5$ represents an oxyalkylene group, n5 represents the average number of oxyalkylene groups and has a value such that the ethylenically unsaturated compound has a Mn, measured according to the method described in the specification, of 1,000 to 12,000 g/mole, and $X^5$ is a moiety that includes an ethylenically unsaturated group; and
(2) an ethylenically unsaturated compound that is different from ethylenically unsaturated compound (1).

**2.** The PMPO of claim 1, wherein the PMPO has a viscosity at 25 °C, measured according to the method described in the specification, of at least 1,000 and less than 15,000 mPa·s and exhibits a monomodal particle size distribution.

**3.** The PMPO of claim 1 or claim 2, wherein the polymer particles of the PMPO have a volume-based mean particle size, measured according to the method described in the specification, of 0.50 to 1.0 μm.

**4.** The PMPO of one of claim 1 to claim 3, wherein the PFS is a free radical polymerization product of:

(1) a free radically polymerizable ethylenically unsaturated monomer; and
(2) a macromer having the average formula:

$$A^1(OR^1OX^1)_{n1}$$

wherein $A^1$ is an organic moiety, the free valence of which is ≥1, each $R^1$ is a divalent residue comprising an alkylene oxide moiety, n1 has a value of at least 1, such as 1 to 8, each $X^1$ is hydrogen or an organic moiety containing reactive unsaturation, copolymerizable with $A^1$, in which about one $X^1$ is the organic moiety containing reactive unsaturation and any remaining $X^1$'s are hydrogen.

**5.** The PMPO of claim 4, wherein n1 has a value of 6.

**6.** The PMPO of one of claim 1 to claim 5, wherein $X^5$ in formula (A) is a moiety that includes a urethane linkage and an ethylenically unsaturated group.

**7.** The PMPO of one of claim 1 to claim 6, wherein the ethylenically unsaturated compound of formula (A) is a reaction product of:

(i) an ethylenically unsaturated compound comprising a hydroxyl-reactive group, and
(ii) a polyether monol of the structure:

$$Z\text{-}(A^5)_{n5}\text{-}OH.$$

**8.** The PMPO of claim 7, wherein the ethylenically unsaturated compound comprising a hydroxyl-reactive group (i) comprises an aliphatically unsaturated aryl or arylaliphatic isocyanate represented by the formula:

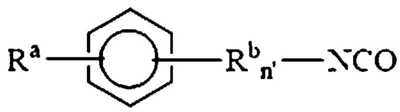

in which: (1) $R^a$ is an unsaturated substituted or unsubstituted aliphatic group; (2) $R^b$ is a substituted or unsubstituted $C_1$-$C_6$ alkylene group; and (3) n' has a value of 0 or 1.

**9.** The PMPO of claim 8, wherein the aliphatically unsaturated aryl or arylaliphatic isocyanate comprises:

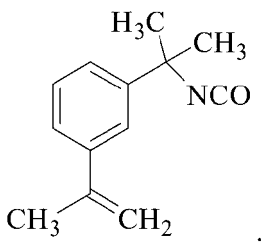

**10.** The PMPO of one of claim 7 to claim 9, wherein the polyether monol is an adduct of a monol and a 1,2-alkylene oxide.

**11.** The PMPO of one of claim 7 to claim 10, wherein the monol comprises a compound represented by the structure:

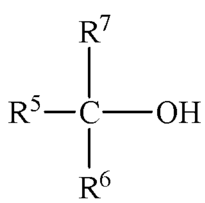

in which $R^5$, $R^6$, and $R^7$ each independently represent H, a $C_1$-$C_{56}$ alkyl group, a $C_6$-$C_{56}$ aryl group, a $C_3$-$C_{56}$ cycloalkyl group, or a $C_7$-$C_{56}$ aralkyl group, or the groups $R^5$, $R^6$, and/or $R^7$ may be linked via a ring system, in which any one or more of $R^5$, $R^6$ and $R^7$ may also represent any of the aforementioned groups that further contain functional groups that do not react with an isocyanate group.

**12.** The PMPO of one of claim 7 to claim 11, wherein the polyether monol has a Mn, measured according to the method described in the specification, of 2,000 g/mol to 12,000 g/mol or 4,000 g/mol to 10,000 g/mol.

**13.** The PMPO of one of claim 1 to claim 12, wherein the ethylenically unsaturated compound (1) is present in an amount of 0.1 to 10% by weight, preferably 0.1 to 3%, based on total weight of the ethylenically unsaturated composition (c).

**14.** The PMPO of one of claim 1 to claim 13, wherein ethylenically unsaturated compound (2) that is different from ethylenically unsaturated compound (1) comprises styrene and acrylonitrile, where styrene is present in an amount of more than 70% by weight and acrylonitrile is present in an amount of less than 30% by weight, each based on total combined weight of styrene and acrylonitrile.

**15.** A polymer polyol (PMPO) comprising a dispersion of polymer particles in a base polyol, wherein the PMPO comprises a reaction product of a reaction mixture comprising:

(a) the base polyol;
(b) a pre-formed stabilizer (PFS); and
(c) an ethylenically unsaturated composition comprising:

(1) an ethylenically unsaturated compound of the formula (A):

$$Z\text{-}(A^5)_{n5}\text{-}OX^5 \qquad (A)$$

in which Z represents a hydrocarbyl residue selected from $C_4$-$C_{60}$ alkyl, aryl, and aralkyl, $A^5$ represents an oxyalkylene group, n5 represents the average number of oxyalkylene groups and has a value of 11 to 264, 62 to 173, or 97 to 127 and $X^5$ is a moiety that includes an ethylenically unsaturated group; and
(2) an ethylenically unsaturated compound that is different from ethylenically unsaturated compound (1).

Europäisches Patentamt
European Patent Office
Office européen des brevets

# EUROPEAN SEARCH REPORT

Application Number
EP 25 22 1656

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/249274 A1 (ADKINS RICK L [US]) 4 September 2014 (2014-09-04)<br>* claims 1-18 *<br>* paragraph [0001] *<br>* paragraph [0074] - paragraph [0095] *<br>* table 1 *<br>* example 3 * | 1-15 | INV.<br>C08G18/63<br>C08G18/22<br>C08F290/06<br>C08G18/28<br>C08G18/48<br>C08G18/76<br>C08G18/81<br>C08G65/12<br>C08G65/26<br>C08G65/333 |
| A | & US 2003/024154 A1 (COMBS GEORGE [US] ET AL) 6 February 2003 (2003-02-06)<br>* paragraph [0022] - paragraph [0025] *<br>* example B *<br>* table 1 *<br>----- | 1-15 | |
| A | US 2022/356296 A1 (ADKINS RICK L [US] ET AL) 10 November 2022 (2022-11-10)<br>* claims 1-16 *<br>* paragraph [0001] *<br>* paragraph [0145] - paragraph [0153] *<br>* examples *<br>* tables 1-3 *<br>----- | 1-15 | |
| | | | TECHNICAL FIELDS SEARCHED (IPC)<br>C08G<br>C08F |

The present search report has been drawn up for all claims

1

| Place of search | Date of completion of the search | Examiner |
|---|---|---|
| Munich | 22 April 2026 | Paulus, Florian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........................................
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 25 22 1656

This annex lists the patent family members relating to the patent documents cited in the above-mentioned European search report. The members are as contained in the European Patent Office EDP file on
The European Patent Office is in no way liable for these particulars which are merely given for the purpose of information.

22-04-2026

| Patent document cited in search report | Publication date | Patent family member(s) | Publication date |
|---|---|---|---|
| US 2014249274 A1 | 04-09-2014 | CN 105026452 A | 04-11-2015 |
| | | EP 2964684 A1 | 13-01-2016 |
| | | JP 6258358 B2 | 10-01-2018 |
| | | JP 2016510824 A | 11-04-2016 |
| | | KR 20150124997 A | 06-11-2015 |
| | | SG 10201707098P A | 28-09-2017 |
| | | SG 11201506957X A | 29-10-2015 |
| | | US 2014249274 A1 | 04-09-2014 |
| | | WO 2014137656 A1 | 12-09-2014 |
| US 2022356296 A1 | 10-11-2022 | EP 4334369 A1 | 13-03-2024 |
| | | US 2022356296 A1 | 10-11-2022 |
| | | WO 2022235485 A1 | 10-11-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5196476 A
- US 3073788 A
- US 7977501 B
- US 8134022 B
- US 8933192 B
- US 8946466 B
- US 9045592 B
- US 9062156 B
- US 9080010 B
- US 9228054 B
- US 9260562 B
- US 9273183 B
- US 9309356 B
- US 9315622 B
- US 9382417 B
- US 4148840 A
- US 5364906 A
- US 5990185 A
- US 6013731 A
- US 6455603 B
- US 4521546 A
- US 4883832 A
- US 63653275